(19) Europäisches Patentamt
European Patent Office
Office européen des brevets

(11) Numéro de publication : **0 187 607**
**B1**

# (12) FASCICULE DE BREVET EUROPÉEN

(45) Date de publication du fascicule du brevet : **07.03.90**

(51) Int. Cl.⁵ : **C 08 G 69/34**, C 08 G 69/40

(21) Numéro de dépôt : **85420220.7**

(22) Date de dépôt : **09.12.85**

## (54) Copolyétheramides techniques souples à basse température.

(30) Priorité : **11.12.84 FR 8419100**

(43) Date de publication de la demande : **16.07.86 Bulletin 86/29**

(45) Mention de la délivrance du brevet : **07.03.90 Bulletin 90/10**

(84) Etats contractants désignés : **AT BE CH DE GB IT LI LU NL SE**

(56) Documents cités :
**EP-A- 0 061 118**
**DE-A- 1 520 937**
**FR-A- 1 542 431**
**FR-E- 94 402**
**US-A- 4 122 229**
**RAPRA ABSTRACTS, vol. 10, no. 34, 20 août 1973, résumé no. 14694l; S.W. SHALABY et al.: "Nylon 12-polyoxybutylene block copolymers" & IEC PROD. RES. DEV., 12, no. 2, June 1973, 128-32**

(73) Titulaire : **RHONE-POULENC CHIMIE**
**25, quai Paul Doumer**
**F-92408 Courbevoie Cedex (FR)**

(72) Inventeur : **Coquard, Jean**
**Route du Crest**
**F-69290 Grezieu La Varenne Craponne (FR)**
Inventeur : **Goletto, Jean**
**24, Chemin des Mouilles**
**F-69130 Ecully (FR)**

(74) Mandataire : **Trolliet, Maurice et al**
**RHONE-POULENC INTERSERVICES Service Brevets Chimie Centre de Recherches de Saint-Fons B.P. 62**
**F-69192 Saint-Fons Cedex (FR)**

**EP 0 187 607 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

Dans la demande française 83/10 939 déposée par la demanderesse le 28 juin 1983 (EP-A-130927), on a décrit de nouveaux copolyétheramides homogènes, à structure bloc, présentant notamment une cristallinité élevée de manière à offrir de hauts points de fusion et une bonne résistance thermo-mécanique, une température de transition vitreuse aussi basse que possible de manière à avoir une souplesse et une élasticité importantes à des températures aussi basses que celles égales ou inférieures à — 20 °C et une viscosité à l'état fondu élevée compatible avec une utilisation aisée dans les domaines du moulage par injection et de l'extrusion.

L'art antérieur dont fait état la demande française consiste dans le brevet américain 4 218 351 qui décrit des élastomères thermoplastiques constitués par des copolyétheramides. Dans cet art antérieur, on propose une famille générale de copolyétheramides qui sont obtenus par réaction directe de trois types de constituants possédant chacun des groupes fonctionnels capables de participer à une réaction donnant naissance à des fonctions amides. Le premier constituant (i) est pris dans le groupe formé par un diacide carboxylique à chaîne courte, une diamine à chaîne courte, un lactame à chaîne courte, un aminoacide à chaîne courte et un mélange de deux ou de plus de deux de ces espèces entre elles ; le second constituant (ii) est un dimère d'acide gras ou un dérivé aminé de dimère d'acide gras ; le troisième constituant (iii) est une polyoxyalkylènediamine ou un acide polyoxyalkylènedicarboxylique. Les constituants entrant en réaction sont choisis de manière à apporter dans le milieu des quantités sensiblement équivalentes de groupes $NH_2$ et COOH. On note, à la lecture des exemples du brevet précité, que les copolyétheramides qui sont effectivement préparés sont obtenus essentiellement par réaction (i) d'un mélange d'un diacide à chaîne courte et d'une diamine à chaîne courte ou d'un mélange d'un lactame et d'un diacide à chaîne courte ou d'une diamine à chaîne courte avec un réactif de type (ii) et un réactif de type (iii). Les copolyétheramides ainsi préparés présentent des propriétés intéressantes, notamment la souplesse à basse température qui est responsable des bonnes propriétés de résilience annoncées. Cependant leur faible viscosité à l'état fondu, qui est généralement inférieure à 10 Pas à 232 °C, ne permet de les utiliser que comme adhésifs. Or on a besoin dans les domaines du moulage et de l'extrusion des matières plastiques, de produits présentant une viscosité à l'état fondu suffisamment élevée pour pouvoir être injectés ou être extrudés de façon convenable. On ne trouve pas décrit dans l'art antérieur des moyens permettant d'obtenir, au départ des mélanges réactionnels conformes à l'enseignement du brevet américain précité, des copolyétheramides possédant une viscosité à l'état fondu suffisamment élevée pour pouvoir être utilisés comme plastiques techniques.

L'objet de la demande française 83/10 939 concerne des copolyétheramides qui répondent à la satisfaction de l'objectif de pouvoir disposer de polymères pour moulage et extrusion présentant, outre une souplesse importante jusqu'à des températures aussi basses que celles égales ou inférieures à — 20 °C, une viscosité à l'état fondu élevée.

Plus spécifiquement, la demande française précitée concerne des copolyétheramides homogènes, à structure bloc, présentant notamment un point de fusion ou de ramollissement au moins égal à 170 °C, une température de transition vitreuse mesurée à EHO au plus égale à — 5 °C et une viscosité à l'état fondu au moins égale à 50 Pas, lesdits copolyétheramides étant susceptibles d'être obtenus conformément au mode opératoire défini par les étapes suivantes :

a) on mélange un lactame ayant de 4 à 12 atomes de carbone avec une solution d'un sel de dimère d'acide gras et de polyoxyalkylènediamine dans un milieu de dissolution à base d'un mélange eau-alcool aliphatique ayant moins de 5 atomes de carbone, d'un mélange eau-alcool-lactame (l'alcool et le lactame utilisés répondant l'un et l'autre aux définitions données ci-avant), de lactame lui-même à l'état fondu ou encore, quand le lactame est soluble dans l'eau, d'un mélange eau-lactame ;

b) la stœchiométrie dudit sel ayant été établie au préalable en mesurant le pH de la solution du sel dans un mélange diluant à base d'eau et d'au moins un composé choisi parmi un alcool aliphatique, un diol aliphatique ou un lactame (l'alcool et le lactame utilisés répondant l'un et l'autre aux définitions données ci-avant, le diol aliphatique comportant de 2 à 6 atomes de carbone) et en ajustant la composition dudit sel de manière à ce que le pH atteigne, à ± 0,05 unité pH, la valeur de pH au point d'équivalence, le mélange de la solution du sel avec le lactame pouvant être omis lorsque la solution du sel dans le milieu de dissolution à base d'un mélange eau-alcool-lactame, d'un mélange eau-lactame ou de lactame lui-même à l'état fondu contient suffisamment de lactame pour obtenir le copolyétheramide de composition souhaitée ;

c) puis on ajoute dans le mélange réactionnel un catalyseur consistant dans un oxyacide minéral ou dans un oxyacide organique autre qu'un acide carboxylique, dont l'une au moins des fonctions acides, quand il y en a plusieurs, possède une constante d'ionisation pKa dans l'eau à 25 °C égale ou inférieure à 4 ;

d) et on soumet ensuite l'ensemble à un chauffage pour faire réagir le lactame avec le sel.

A propos de la viscosité à l'état fondu, la demande française précitée indique qu'elle est mesurée à 230 °C, sous un gradient de cisaillement de 10 $s^{-1}$, à l'aide d'un rhéomètre Davenport dans le cas des

copolyétheramides obtenus à partir de lactames ayant 6 à 12 atomes de carbone ; dans le cas des copolyétheramides obtenus à partir de lactames ayant 4 à 5 atomes de carbone, la viscosité à l'état fondu est mesurée comme indiqué ci-avant, mais à 260 °C.

Il a maintenant été trouvé, et c'est ce qui constitue l'objet de la présente invention, que les copolyétheramides homogènes, à structure bloc, présentant les propriétés mentionnées dans la demande française précitée peuvent être obtenus en suivant un mode opératoire qui est modifié au niveau de la définition du composé aminé servant à faire le sel dont on parle dans l'étape (a) et/ou au niveau de la définition du catalyseur dont on parle dans l'étape (c), et/ou au niveau du moment d'introduction du catalyseur.

Plus spécifiquement, la présente invention concerne des copolyétheramides homogènes, à structure bloc, présentant notamment un point de fusion ou de ramollissement au moins égal à 170 °C, une température de transition vitreuse mesurée à EHO au plus égale à — 5 °C et une viscosité à l'état fondu au moins égale à 50 Pas, lesdits copolyétheramides étant susceptibles d'être obtenus conformément au mode opératoire défini par les étapes suivantes :

a') on mélange un lactame ayant de 4 à 12 atomes de carbone avec une solution d'un sel de dimère d'acide gras et d'un composé aminé approprié dans un milieu de dissolution à base d'un mélange eau-alcool aliphatique ayant moins de 5 atomes de carbone, d'un mélange eau-alcool-lactame (l'alcool et le lactame utilisés répondant l'un et l'autre aux définitions données ci-avant), de lactame lui-même à l'état fondu ou encore, quand le lactame est soluble dans l'eau, d'un mélange eau-lactame ;

b') la stœchiométrie dudit sel ayant été établie au préalable en mesurant le pH de la solution du sel dans un mélange diluant à base d'eau et d'au moins un composé choisi parmi un alcool aliphatique, un diol aliphatique ou un lactame (l'alcool et le lactame utilisés répondant l'un et l'autre aux définitions données ci-avant, le diol aliphatique comportant de 2 à 6 atomes de carbone) et en ajustant la composition dudit sel de manière à ce que le pH atteigne, à ± 0,05 unité pH, la valeur de pH au point d'équivalence, le mélange de la solution du sel avec le lactame pouvant être omis lorsque la solution du sel dans le milieu de dissolution à base d'un mélange eau-alcool-lactame, d'un mélange eau-lactame ou de lactame lui-même à l'état fondu contient suffisamment de lactame pour obtenir le copolyétheramide de composition souhaitée ;

c') puis on ajoute dans le mélange réactionnel un catalyseur ;

d') et on soumet ensuite l'ensemble à un chauffage pour faire réagir le lactame avec le sel ;

lesdits copolyétheramides étant caractérisés en ce que l'ont met en œuvre dans l'étape (a') un sel de dimère d'acide gras et d'un mélange de polyoxyalkylènediamine avec une triamine et que l'on utilise dans l'étape (c') un catalyseur consistant soit en un composé (alpha), soit en un composé (bêta), (alpha) désignant un oxyacide minéral ou un oxyacide organique autre qu'un acide carboxylique, dont l'une au moins des fonctions acides, quand il y en a plusieurs, possède une constante d'ionisation pka dans l'eau à 25 °C égale ou inférieure à 4, (bêta) désignant un sel alcalin ou alcalino-terreux de cet acide.

La présente invention concerne encore des copolyétheramides présentant les propriétés énoncées ci-avant, susceptibles d'être obtenus conformément au mode opératoire défini par les étapes (a') à (d') énoncées également ci-avant, lesdits copolyétheramides étant caractérisés cette fois en ce que l'on met en œuvre dans l'étape (a') un sel de dimère d'acide gras et de polyoxyalkylènediamine sans triamine et que l'on utilise dans l'étape (c') un catalyseur consistant dans le composé (bêta).

Les copolyétheramides présentant les propriétés énoncées dans la demande française 83/10 939 et dans la présente invention ont été décrits comme susceptibles d'être obtenus en ajoutant le catalyseur (alpha) ou (bêta) dans le mélange réactionnel comprenant le sel de dimère d'acide gras et de composé aminé dont la stœchiométrie a été établie au préalable. On a constaté qu'il peut être avantageux, notamment lorsque le catalyseur est un oxyacide minéral ou organique fort, d'ajouter le catalyseur dans la solution de départ du sel de dimère d'acide gras et de composé aminé et de procéder ensuite au réglage de la stœchiométrie. La présente invention concerne donc encore des copolyétheramides présentant les propriétés énoncées ci-avant, susceptibles d'être obtenus conformément au mode opératoire défini par les étapes suivantes :

a") on mélange un lactame ayant de 4 à 12 atomes de carbone avec une solution d'un sel de dimère d'acide gras et d'un composé aminé approprié dans un milieu de dissolution à base d'un mélange eau-alcool aliphatique ayant moins de 5 atomes de carbone, d'un mélange eau-alcool-lactame (l'alcool et le lactame utilisés répondant l'un et l'autre aux définitions données ci-avant), de lactame lui-même à l'état fondu ou encore, quand le lactame est soluble dans l'eau, d'un mélange eau-lactame ;

b") la stœchiométrie de ladite solution ayant été établie au préalable en mesurant le pH de la solution dans un mélange diluant à base d'eau et d'au moins un composé choisi parmi un alcool aliphatique, un diol aliphatique ou un lactame (l'alcool et le lactame utilisés répondant l'un et l'autre aux définitions données ci-avant, le diol aliphatique comportant de 2 à 6 atomes de carbone) et en ajustant la composition de manière à ce que le pH atteigne, à ± 0,05 unité pH, la valeur de pH au point d'équivalence, le mélange de la solution du sel avec le lactame pouvant être omis lorsque la solution du sel dans le milieu de dissolution à base d'un mélange eau-alcool-lactame, d'un mélange eau-lactame ou de lactame lui-même à l'état fondu contient suffisamment de lactame pour obtenir le copolyétheramide de composition souhaitée ;

c") puis on fait réagir par chauffage le lactame avec le sel en présence d'un catalyseur ; lesdits copolyétheramides étant caractérisés en ce que le catalyseur utilisé est ajouté dans la solution du sel de dimère d'acide gras et de composé aminé avant de procéder au réglage de la stœchiométrie de ladite solution, le composé aminé consistant dans une polyoxyalkylènediamine prise seule ou en mélange avec une triamine et le catalyseur consistant soit dans le composé (alpha), soit dans le composé (bêta).

Les triamines que l'on peut utiliser pour la mise en œuvre de la présente invention sont des polyamines aliphatiques biprimaires secondaires ou triprimaires comprenant éventuellement un ou plusieurs ponts éther ayant un nombre d'atomes de cartone au moins égal à 8. On citera en particulier la bis-hexaméthylènetriamine de formule $H_2N—(CH_2)_6—NH—(CH_2)_6—NH_2$ et les polyoxyalkylènetriamines répondant à la formule générale :

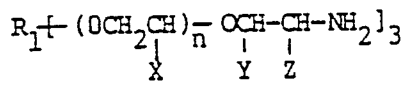

(I)

dans laquelle :

$R_1$ est un radical trivalent qui est le résidu d'un alcool aliphatique trihydroxylé capable d'être polyoxyalkylé, ayant de 3 à 10 atomes de carbone ;

Z est un radical alkyle linéaire ou ramifié contenant 1 à 18 atomes de carbone ;

X et Y, identiques ou différents, représentent chacun un atome d'hydrogène ou un radical Z ;

le symbole n représente un nombre moyen allant de 0 à 50.

Ces polyoxyalkylènetriamines peuvent être obtenues selon des procédés connus tel que celui décrit dans le brevet américain 3 654 370.

Les triamines préférées pour la conduite de la présente invention sont les polyoxypropylènetriamines répondant à la formule (I) donnée ci-avant dans laquelle : $R_1$ a la définition donnée ci-avant ; Z est un radical méthyle ; X représente Z ; Y est un atome d'hydrogène et n a une valeur moyenne allant de 1 à 16.

Les triamines spécialement préférées sont les polyoxypropylènetriamines de formule :

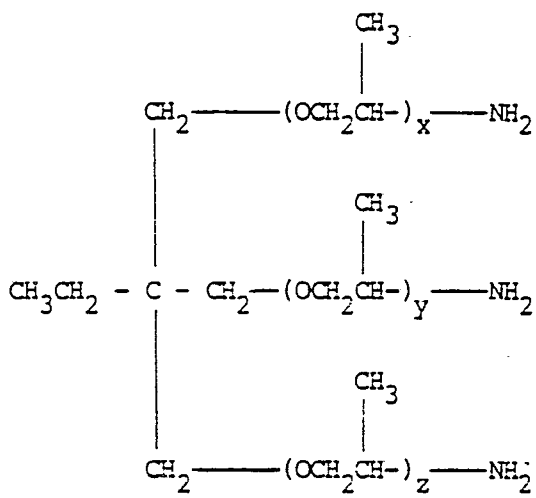

(II)

dans laquelle ($R_1$ est donc le résidu du triméthylolpropane) les symboles x, y et z représentent chacun un nombre moyen allant de 1 à 10, avec la some x + y + z allant de 3 à 30.

Les triamines toutes spécialement préférées sont les polyoxypropylènetriamines dérivées du triméthylolpropane pour lesquelles la somme x + y + z va de 5 à 10.

Les proportions de triamine engagées, quand on choisit d'en utiliser, exprimées en nombre de millimole de triamine pour 1 kilogramme de copolyétheramide final, sont comprises généralement entre 0,1 et 20, de préférence, entre 1 et 10.

Pour ce qui est de l'oxyacide minéral ou organique fort (alpha) qui peut être engagé, on fait appel, comme il est indiqué dans la demande française 83/10 939, à un mono- ou un polyacide oxygéné dont l'une au moins des fonctions acides possède une constante d'ionisation pka dans l'eau à 25 °C égale ou inférieure à 4.

Comme acides forts qui conviennent on peut citer par exemple :

— parmi les oxyacides minéraux : les acides sulfureux, sulfurique, hypophosphoreux, phosphoreux, orthophosphorique ou pyrophosphorique ;

— parmi les oxyacides organiques :

• les acides organosulfoniques de formule $R_2—SO_3H$ (III) dans laquelle $R_2$ représente : un

radical alkyle linéaire ou ramifié ayant de 1 à 6 atomes de carbone ; un radical phényle éventuellement substitué par 1 à 3 radicaux alkyles ayant de 1 à 3 atomes de carbone ; un radical phénylalkyle comportant de 1 à 3 atomes de carbone dans le reste alkyle et dont le noyau benzénique peut éventuellement être substitué par 1 à 3 radicaux alkyles ayant de 1 à 3 atomes de carbone ; ou un radical naphtyle éventuellement substitué par 1 à 4 radicaux alkyles ayant de 1 à 3 atomes de carbone ;

- les acides organophosphoniques de formule $R_3$—P(O)(OH)$_2$ (IV) dans laquelle $R_3$ représente un radical alkyle,, un radical phényle ou un radical phénylalkyle, chacun de ces radicaux ayant la définition donnée ci-avant pour $R_2$ ;
- les acides organophosphiniques de formule $R_4R_5$—P(O)(OH) (V) dans laquelle $R_4$ et $R_5$, identiques ou différents, représentent chacun : un radical alkyle linéaire ayant 1 à 3 atomes de carbone ; un radical phényle ou un radical phénylalkyle, chacun de ces deux derniers radicaux ayant la définition donnée ci-avant pour $R_2$ ;
- les acides organophosphoneux de formule $R_6$H—P(O)(OH) (VI) dans laquelle $R_6$ représente : un radical alkyle linéaire ou ramifié ayant de 1 à 4 atomes de carbone (la ramification étant exclue pour un radical alkyle à 4 atomes de carbone) ; un radical phényle ou un radical phénylalkyle, chacun de ces deux derniers radicaux ayant la définition donnée ci-avant pour $R_2$.

On préfère utiliser comme acide fort (alpha), les acides dérivés du phosphore et plus particulièrement les acides hypophosphoreux, phosphoreux, orthophosphorique, pyrophosphorique, méthylphosphonique, phénylphosphonique, benzylphosphonique, diméthylphosphinique, diphénylphosphinique, méthylphénylphosphinique, dibenzylphosphinique, méthylphosphoneux, phénylphosphoneux ou benzylphosphoneux.

Pour ce qui est du sel d'acide (bêta), on fait appel généralement à des sels de métaux alcalins ou de métaux alcalino-terreux dérivés des oxyacides minéraux ou organiques (alpha).

On préfère utiliser comme sel (bêta), ceux qui sont totalement solubles dans le mélange réactionnel. Parmi ces sels (bêta) préférés, conviennent bien les sels de sodium et de potassium issus des types particuliers d'oxyacides minéraux ou organiques (alpha) qui conviennent cités ci-avant. Les sels (bêta) qui conviennent tout particulièrement bien sont les sels de sodium et de potassium issus des acides préférés dérivés du phosphore cités nommément ci-avant.

Les proportions d'acide fort (alpha) ou de sel (bêta), exprimées en pourcentage en poids par rapport au copolyétheramide final, sont comprises généralement entre 0,01 et 1 % et de préférence entre 0,01 et 0,5 %.

Les conditions générales pour mettre en pratique la présente invention sont celles décrites dans la demande française précitée et rappelées ci-après.

A titre d'illustration des lactames qui peuvent convenir, on citera : le γ-butyrolactame, le δ-amylolactame, l'ε-caprolactame, l'enanthrolactame, le capryllactame, l'azacycloundécanone-2, l'azacyclododécanone-2, le laurolactame. Le lactame auquel on fait appel de préférence est l'ε-caprolactame ; le réactif utilisé possède alors les mêmes caractéristiques que celles du réactif mis en œuvre pour l'obtention industrielle du polycaprolaotame ou nylon 6.

Les acides dimères employés sont obtenus par polymérisation de composés comprenant 80 % à 100 % en poids d'acide(s) gras monomère(s) ayant de 16 à 20 atomes de carbone et 20 % à 0 % en poids d'acide(s) gras monomère(s) ayant de 8 à 15 atomes de carbone et/ou de 21 à 24 atomes de carbone. Par acides gras monomères, on entend désigner des monoacides aliphatiques saturés ou insaturés, linéaires ou ramifiés.

Parmi les acides gras monomères saturés linéaires ou ramifiés, on peut citer : les acides caprylique, pélargonique, caprique, laurique, myristique, palmitique et isopalmitique, stéarique, arachidique, behénique et lignocérique.

Parmi les acides gras monomères à insaturation(s) éthylénique(s) linéaires ou ramifiés on peut citer : les acides 3-octénoïque, 11-dodécénoïque, oléique, lauroléique, myristoléique, palmitoléique, gadoléique, cétoléique, linoléique, linolénique, eicosatétraenoïque et chaulmoogrique. Certains acides à insaturation acétylénique peuvent aussi conduire à des acides polymères, mais ils n'existent pas de façon intéressante à l'état naturel et de ce fait leur intérêt économique est très faible.

Les acides gras polymères obtenus par polymérisation à la chaleur, en présence éventuellement de catalyseurs comme des peroxydes ou des acides de Lewis, peuvent être fractionnés par exemple par des techniques classiques de distillation sous vide ou d'extraction par des solvants. On peut aussi les hydrogéner pour réduire leur taux d'insaturation et ainsi réduire leur coloration.

Conformément aux indications de la demande française, les acides dimères utilisés de préférence sont des acides gras polymères fractionnés dans lesquels la fraction en acide difonctionnel est supérieure à 94 % en poids, la fraction en acide monofonctionnel est inférieure à 1 % en poids et plus préférentiellement encore égale ou inférieure à 0,5 % en poids, la fraction en acide de fonctionnalité supérieure à 2 est inférieure à 5 % en poids et plus préférentiellement encore égale ou inférieure à 3 % en poids.

Les acides dimères utilisés plus préférentiellement encore sont les espèces obtenues par fractionnement (conduisant aux fractions indiquées ci-avant) d'acides gras polymères ayant subi en plus une hydrogénation.

Les acides dimères qui conviennent tout spécialement bien sont, comme indiqué dans la demande

française précitée, les espèces obtenues par fractionnement d'une composition hydrogénée issue de la polymérisation catalytique d'acide(s) gras monomère(s) ayant 18 atomes de carbone. Dans ce contexte, en raison de leur facilité d'approvisionnement et de leur polymérisation relativement aisée, les acides oléique, linoléique et linolénique, pris seuls ou deux à deux ou de préférence sous forme de mélange ternaire, sont les produits de départ tout particulièrement préférés pour la préparation des acides gras polymères.

Un autre réactif mis en œuvre consiste dans des polyoxyalkylènediamines. Comme indiqué dans la demande française précitée, ces composés peuvent être représentés par la formule générale :

$$H_2N—R_7—(OR_8)_m—OR_9—NH_2 \quad (VII)$$

dans laquelle les symboles $R_7$, $R_8$, $R_9$, identiques ou différents, représentent des radicaux aliphatiques saturés divalents, linéaires ou ramifiés, comportant de 1 à 10 atomes de carbone et le symbole m est un nombre déterminé de manière à procurer une masse moléculaire allant de 100 à 10 000 et, de préférence, allant de 300 à 5 000.

A titre d'illustration de polyoxyalkylènediamines qui conviennent bien, la demande française 83/10 939 cite par exemple :

— des polyoxypropylènediamines de formule (VII) dans laquelle

$$R_7 = R_8 = R_9 = -\underset{}{\overset{CH_3}{\overset{|}{CH}}} - CH_2 \ ;$$

— des polyoxyéthylènediamines de formule (VII) dans laquelle

$$R_7 = R_9 = -\overset{CH_3}{\overset{|}{CH}} - CH_2 - \text{ et } R_8 = - CH_2 - CH_2 - \ ;$$

— ou des polyoxytétraméthylènediamines de formule (VII) dans laquelle

$$R_7 = R_9 = -\overset{CH_3}{\overset{|}{CH}} - CH_2 - \text{ et } R_8 = - CH_2 - CH_2 - CH_2 - CH_2 -.$$

Il est bien entendu possible de mettre en œuvre, comme indiqué dans la demande française précitée, un mélange de deux ou de plus de deux polyoxyalkylènediamines.

Le procédé de préparation des copolyétheramides conformes à la présente invention consiste à réaliser dans un premier temps une solution dans un milieu de dissolution approprié d'un sel de dimère d'acide gras et de polyoxyalkylènediamine prise seule ou en mélange avec une triamine (ladite solution contenant ou non le catalyseur) dont on contrôlera et règlera ensuite la stœchiométrie par pH métrie avant de l'engager dans la réaction de polycondensation avec le lactame (après avoir ajouté, le cas échéant, le catalyseur quand la solution de départ n'en contient pas).

Comme il l'a été mentionné ci-avant, le milieu de dissolution du sel considéré et éventuellement du catalyseur peut être constitué par un mélange eau-alcool (A), par un mélange eau-alcool-lactame (B), par du lactame fondu (C) ou encore, quand le lactame choisi est soluble dans l'eau, par un mélange eau-lactame (D). Le lactame qui peut être employé alors est avantageusement le même que celui choisi comme réactif de polycondensation. S'agissant de la teneur en eau des milieux de dissolution (A) et (D) et de la concentration du sel dans les milieux (A), (C) et (D), il convient de se reporter, comme le mentionne la demande française précitée, aux indications données par la demanderesse dans le brevet français 2 407 227, aux pages 2 et 3. On fera noter que de petites variations par rapport à l'enseignement de cet art antérieur peuvent intervenir au niveau de la définition des bornes entre lesquelles se situent les valeurs de la teneur en eau des milieux de dissolution et de la concentration du sel de dimère d'acide gras et de composé aminé ; ces petites variations sont à mettre essentiellement sur le compte du fait que, dans la présente invention, d'une part le sel est préparé à partir d'une polyoxyalkylènediamine prise seule ou en mélange avec une triamine alors que dans l'art antérieur considéré le sel est préparé à partir d'hexaméthylènediamine et d'autre part on peut mettre en œuvre présentement un autre lactame que le caprolactame visé dans cette référence. L'homme de l'art pourra cependant déterminer aisément ces petites variations à l'aide d'essais simples à sa portée immédiate. A propos du milieu de dissolution (B), bien qu'il n'ait pas été décrit dans le brevet français précité, sa composition peut être là encore aisément déterminée à la lumière de l'enseignement de ce document.

S'agissant de la manière d'ajuster la stœchiométrie des solutions du sel contenant ou non le catalyseur, il convient de se reporter également à l'enseignement du brevet français 2 407 227. Comme il est indiqué dans ce document à la page 3, les mélanges solvants, servant à diluer la solution du sel contenant ou non le catalyseur en vue de procéder aux mesures du pH, qui sont préférés, sont des

mélanges binaires comme par exemple des mélanges eau-alcool, eau-diol ou eau-lactame (soluble dans l'eau), mais il est aussi possible d'utiliser des mélanges ternaires comme par exemple des mélanges eau-alcool-lactame ou eau-diol-lactame, en particulier dans le cas où le lactame choisi est insoluble dans l'eau. A propos de la composition des mélanges diluants utilisables, elle est la même que celle indiquée dans l'art antérieur considéré, avec éventuellement l'apparition de petites variations touchant à la définition des bornes entre lesquelles se situent les proportions respectives de chaque constituant de ces mélanges diluants ces petites variations étant liées essentiellement comme indiqué ci-avant à la mise en œuvre d'un sel de nature différente et le cas échéant à l'emploi d'un autre lactame que le caprolactame et pouvant être déterminées aisément par l'homme de l'art à l'aide d'essais simples.

Lorsque le réactif de type lactame mis en œuvre est de l'ε-caprolactame, et ceci correspond comme il a été dit ci-avant à une mise en œuvre préférentielle, un milieu de dissolution qui est particulièrement recommandé pour la réalisation de la solution du sel de dimère d'acide gras et de polyoxyalkylènediamine prise seule ou en mélange avec une triamine (ladite solution contenant ou non le catalyseur) consiste en des mélanges eau-ε caprolactame ayant une teneur en eau comprise entre 40 et 80 % en poids ; s'agissant de la détermination du pH de la solution, elle est effectuée de manière très préférentielle dans des mélanges diluants eau-isopropanol ayant une teneur en eau comprise entre 20 et 60 % en poids.

La solution du sel (contenant ou non le catalyseur), dont la stœchiométrie a été rigoureusement contrôlée et réglée, est mélangée avec des quantités adéquates de lactame (et le cas échéant de catalyseur quand la solution de départ n'en contient pas), puis on procède à la polycondensation des divers monomères engagés (lactame, acide dimère et diamine à ponts éther prise seule ou en mélange avec une triamine sous forme de sel).

Comme indiqué dans la demande française 83/10 939, la polycondensation des divers monomères engagés est réalisée d'abord en portant progressivement la température du mélange réactionnel entre 130 °C et 280 °C en opérant sous pression atmosphérique et en assurant une distillation régulière de l'eau de polycondensation ainsi que, le cas échéant, de l'eau et éventuellement de l'alcool entrant dans la constitution du milieu de dissolution du sel. La polycondensation est poursuivie en maintenant, après distillation, la masse fondue aux températures précitées pendant une durée qui peut varier d'environ 15 minutes à environ 2 heures. La polycondensation est achevée en établissant ensuite une pression réduite de manière à atteindre progressivement une valeur inférieure à $200 \cdot 10^2$ Pa et en maintenant le milieu de polycondensation aux températures précitées pendant une durée qui peut varier d'environ 15 minutes à environ 2 heures ; cette dernière étape sous pression réduite présente l'avantage de permettre d'éliminer une grande partie des monomères non polycondensés.

Les copolyétheramides obtenus peuvent bien entendu être modifiés par l'ajout, par exemple dans leur milieu de préparation, d'un ou plusieurs additifs tels que notamment : des stabilisants et des inhibiteurs de dégradation par oxydation, par l'ultraviolet, par la lumière ou par la chaleur ; des lubrifiants ; des matières colorantes ; des agents de nucléation ; des agents de nucléation ; des agents anti-mousse ; etc.

Dans les copolyétheramides selon la présente invention, la cristallinité et par conséquent la cohésion et la faculté d'obtenir des points de fusion élevés et de bonnes propriétés thermo-mécaniques sont apportées par les blocs amides ; par bloc amide on entend désigner essentiellement l'enchaînement des segments de formule (VIII) qui dérivent du lactame engagé par ouverture du cycle :

$$—NH—E—CO— \qquad (VIII)$$

E représentant la chaîne hydrocarbonée du lactame. La possibilité d'obtenir une Tg aussi basse que possible et par conséquent la faculté d'avoir une souplesse et une élasticité importantes sont apportées par les blocs éthers ; par bloc éther on entend désigner essentiellement l'enchaînement des segments de formule (IX) qui dérivent de la condensation d'une molécule de polyoxyalkylènediamine sur une molécule d'acide dimère :

$$—HN—F—NH—CO—G—CO— \qquad (IX)$$

F et G représentant les restes organiques reliant les groupes fonctionnels de la polyoxyalkylènediamine et de l'acide dimère. La triamine, quand on choisit de l'utiliser, participera de façon minoritaire à la confection des blocs amides et/ou des blocs éther, suivant sa structure. Dans le cas des polyoxyalkylènetriamines par exemple, la triamine participe à la confection des blocs éthers uniquement.

En modifiant les proportions respectives des blocs amides et des blocs éthers dans le copolyétheramide final, on peut faire varier dans de larges limites la souplesse et l'élasticité du polymère obtenu. Un bon compromis en matière de cristallinité, de souplesse et d'élasticité peut être trouvé pour des proportions pondérales de blocs amides dans le polymère final comprises entre 15 et 85 % et de préférence entre 40 et 60 % et pour des proportions pondérales de blocs éthers comprises entre 85 et 15 % et de préférence entre 60 et 40 %. Les quantités de réactifs mis en œuvre (lactame et sel de dimère d'acide gras et de composé aminé) sont bien entendu déterminées de manière à obtenir un copolyétheramide présentant de pareilles proportions pondérales de blocs amides et de blocs éthers. Pour le calcul de ces proportions pondérales, on considère, en absence de triamine, que les blocs amides dérivent

directement du lactame de départ et que les blocs amides dérivent directement du lactame de départ et que les blocs éthers dérivent du sel d'acide dimère et de diamine à ponts éthers engagé par perte de deux moles d'eau par mole de sel ; en présence par exemple d'une polyoxyalkylènetriamine, on considère que les blocs amides dérivent toujours directement du lactame de départ, tandis que les blocs éthers dérivent du sel d'acide dimère et du mélange de diamine à ponts éthers avec la triamine à ponts éthers par perte d'une mole d'eau par groupe COOH réagissant avec un groupe $NH_2$ issu de l'ensemble des polyamines.

On a trouvé, et cela de manière totalement inattendue, que pour avoir à la fois le bon compromis dont on vient de parler et des viscosités à l'état fondu élevées, il est obligatoire de conduire la polycondensation en présence du catalyseur qui a été défini ci-avant dans le présent mémoire.

En définitive, les copolyétheramides obtenus présentent une bonne résistance thermo-mécanique due à leurs points de fusion élevés allant de 170 °C à environ 240 °C. Ils possèdent une Tg, mesurée à EHO, qui peut atteindre des valeurs inférieures à — 50 °C, ce qui leur confère une souplesse et une élasticité (pouvant être réglées en jouant sur les proportions de blocs éthers) qui peuvent être maintenues à des températures aussi basses que celles comprises entre — 20 °C et — 40 °C. Leur viscosité élevée à l'état fondu, mesurée dans les conditions définies ci-avant, allant de 50 poises à 1 000 Pas et même davantage, leur confère aussi une excellente aptitude au moulage par injection et à l'extrusion. Etant parfaitement homogènes, ils présentent de plus de bonnes propriétés de transparence. Diverses applications faisant appel aux qualités spécifiques de ces copolyétheramides peuvent être envisagées dans des domaines aussi variés que les industries mécaniques, le bâtiment, l'industrie automobile, l'électroménager.

Les exemples qui suivent illustrent de manière non limitative comment la présente invention peut être mise en pratique.

Dans ces exemples un certain nombre de contrôles sont effectués. De même, diverses propriétés sont mesurées. On indique ci-après les modes opératoires et/ou les normes selon lesquelles ces contrôles et mesures sont effectués.

Détermination du pH des solutions de sel

Les mesures de pH sont effectuées à 20 °C à l'aide d'un pH mètre dénommé Radiometer PHM 62 étalonné au centième d'unité pH.

Analyse microcalorimétrique

On caractérise les polymères par les caractéristiques de fusion telles que les endothermes de fusion Ef et les exothermes de cristallisation Ec.

Ces déterminations sont effectuées sur un échantillon soumis à des variations de température tant en montée qu'en descente de 10 °C/min. On détermine ainsi une courbe par microcalorimétrie différentielle sur laquelle on peut repérer les points de fusion (Tf) et de cristallisation au refroidissement (Tc). La différence entre Tf et Tc constitue la surfusion Δ caractérisant la nucléation. Une autre caractéristique de cristallisation liée à la vitesse de croissance des cristallites, Tg α, a été déterminée ; α est l'angle formé par l'horizontale de la ligne de base avec la partie initiale du pic de l'exotherme de cristallisation au refroidissement (l'horizontale de la ligne de base et le pic de l'exotherme de cristallisation étant déterminées sur la courbe obtenue par microcalorimétrie différentielle).

Transition vitreuse

La température de transition vitreuse (Tg) correspond à la chute brutale du module de cisaillement en fonction de la température. Elle peut être déterminée sur le graphique représentant les variations du module de torsion en fonction de la température, variations mesurées par analyse thermomécanique au pendule de torsion automatique.

Module de cisaillement en torsion

Il est déterminé à deux températures : à — 20 °C et à + 20 °C au pendule automatique de torsion sous une fréquence de l'ordre de 1 Hertz selon la norme ISO R 537. Les éprouvettes sont conditionnées à EHO, c'est-à-dire qu'elles sont placées en dessicateur sur silicagel et séchées 24 heures à température ambiante sous 0,66-1,33.$10^2$ Pa avant de réaliser les mesures. Les résultats sont exprimées en MPa.

Dans les exemples qui suivent, s'agissant de l'acide dimère mis en œuvre, on fait appel à un composé mis dans le commerce par la Société UNICHEMA CHEMIE sous la marque déposée PRIPOL 1010 dans lequel la fraction en acide difonctionnel est supérieure à 95 % en poids. Cette fraction en acide difonctionnel consiste en un mélange d'isomères ayant 36 atomes de carbone dont l'espèce prépondérante est un composé saturé de formule :

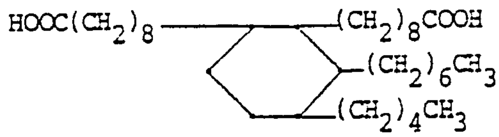

La fraction en acide monofonctionnel (dont le taux pondéral sera précisé ultérieurement) est constituée essentiellement par de l'acide oléique ; quant à la fraction en acide de fonctionnalité supérieure à 2 (dont le taux pondéral sera précisé également ultérieurement), elle est constituée essentiellement par un mélange de trimères isomères ayant 54 atomes de carbone ; la masse moléculaire moyenne de cet acide dimère est de l'ordre de 565.

Avant de décrire les exemples annoncés, on va illustrer dans l'essai 1 suivant ce qui se passe quand on met en œuvre l'enseignement de l'art antérieur, notamment celui du brevet américain 4 218 351. L'essai 2 suivant décrit les résultats obtenus lorsque l'on met en œuvre la technique de réglage de la stœchiométrie conforme à l'enseignement de la demande française 83/10 939, mais en effectuant la polymérisation en absence de catalyseur.

Essai 1 :

L'appareillage est constitué par un autoclave de 1 litre muni :
— d'un système de chauffage par fluide caloporteur,
— d'un agitateur ruban hélicoïdal (vitesse 10 tours/min à 75 tours/min),
— d'une colonne à distiller,
— d'un système permettant la mise sous pression d'azote,
— d'un circuit permettant de condenser et de recueillir les produits volatils, relié à la tête et au pied de la colonne à distiller.

Dans l'autoclave préchauffé à 75 °C, on introduit :
— caprolactame pur : 250 g
— dimère d'acide gras commercialisé sous la marque déposée PRIPOL 1 010 par la Société UNICHEMA CHEMIE, ayant un taux de monomère de 0,03 % et un taux de trimère de 3 % en poids et présentant une acidité comprise entre 3,43 meq/g et 3,50 meq/g : 55,4 g
— polyoxypropylènediamine commercialisée par la Société TEXACO sous la dénomination JEFFAMINE D 2 000 présentant une basicité comprise entre 0,96 meq/g et 0,98 meq/g : 198 g
— antioxydant commercialisé sous la marque déposée IRGANOX 1 010 par la Société CIBA GEIGY : 0,5 g.

Acidité des acides dimères : elle est déterminée par dosage potentiométrique d'une solution d'acide dimère dans le méthanol (0,25 g d'acide dimère pour 80 $cm^3$ de méthanol) par une solution aqueuse d'hydroxyde de sodium 0,1 N.

Basicité des polyoxypropylènediamines : elle est déterminée par dosage potentiométrique d'une solution de la diamine dans un mélange eau/méthanol 50/50 (en volume) (0,5 g à 1 g de diamine pour 80 $cm^3$ du mélange solvant) par une solution aqueuse d'acide chlorhydrique 0,1 N.

La masse réactionnelle est homogénéisée durant 15 minutes et on effectue trois purges à l'azote par mise sous pression de $3.10^5$Pa, puis décompression. La colonne étant mise en reflux total, on porte la température de la masse à 175 °C en 30 minutes, puis on maintient la masse sous agitation durant 150 minutes à 175 °C.

On élève ensuite progressivement en 30 minutes environ la température de la masse jusqu'à 230 °C tout en distillant régulièrement l'eau de réaction. On poursuit la distillation durant deux heures tout en maintenant la température de la masse réactionnelle à 230 °C.

On établit ensuite progressivement en 60 minutes une pression de $26,7.10^2$ Pa tout en maintenant la température de la masse à 230 °C. La masse est homogénéisée à 230 °C durant 30 minutes sous une pression de $26.7.10^2$ Pa. L'agitation est arrêtée, puis on établit dans l'autoclave une pression d'azote de $3.10^5$ Pa et on soutire le polymère. Le polymère très fluide extrudé de l'autoclave est recueilli sur un plateau. On le laisse refroidir à l'abri de l'humidité puis il est découpé en petits fragments que l'on conserve à l'abri de l'humidité.

Le produit obtenu est transparent, faiblement coloré en jaune et présente une viscosité à l'état fondu, mesurée à 230 °C sous un gradient de cisaillement $\gamma = 10s^{-1}$, inférieure à 7,5 Pas.

Essai 2 :

1. Préparation du sel d'une polyoxypropylènediamine de masse moléculaire égale à 2 065 et du dimère d'acide gras en solution à 33,33 % en poids dans le mélange eau/caprolactame 50/50 (en poids) :

Dans un ballon en verre de 10 litres muni d'un agitateur à hélices (trois pales ; vitesse de rotation : 100 tours/min), d'une ampoule d'addition et pouvant travailler sous atmosphère d'azote, sont chargés sous addition :

— eau permutée : 1 500 g

— caprolactame : 1 500 g

— polyoxypropylènediamine de masse moléculaire égale à 2 065 commercialisée par la Société BASF sous la dénomination ETHERDIAMINE 2 000 : 1 165 g.

Le mélange est homogénéisé durant environ une heure et le volume libre du ballon est purgé par de l'azote.

On introduit dans la solution agitée, par coulée régulière en 30 minutes environ, 335 g de dimère d'acide gras commercialisé sous la marque déposée PRIPOL 1 010 par la Société UNICHEMA CHEMIE et ayant un taux de monomère de 0,03 % et un taux de trimère de 3 %. La solution est homogénéisée durant 30 minutes.

On effectue un petit prélèvement d'environ 10 $cm^3$ que l'on dilue par un mélange eau/isopropanol (42,85/57,15 en poids) de façon à amener la concentration du sel de l'acide dimère et de la polyoxypropylènediamine à 10 % en poids. La valeur du pH à 20 °C de cette solution diluée est inférieure à celle du pH au point d'équivalence.

Dans la solution concentrée, on introduit 27,6 g d'une solution de la polyoxypropylènediamine à 33,33 % en poids d'un mélange eau/caprolactame (50/50 en poids). La solution est homogénéisée durant 30 minutes, puis on effectue à nouveau une mesure du pH en solution dilieu à 10 % en sel comme précédemment. La valeur du pH de la solution diluée atteint, à plus ou moins cinq centièmes d'unité pH, celle du pH au point d'équivalence.

La solution concentrée, ainsi ajustée, est conservée à 25 °C sous atmosphère d'azote.

2. Préparation d'un copolyétheramide caprolactame/acide dimère-polyoxypropylènediamine de masse moléculaire 2065, de composition pondérale voisine de 50/50 (blocs amides/blocs éthers) en utilisant un sel d'acide dimère et de polyoxypropylènediamine dont la stœchiométrie a été établie suivant la technique conforme à la demande française 83/10939 et en effectuant la polymérisation en absence d'oxyacide ayant une constante d'ionisation pka dans l'eau à 25 °C inférieure ou égale à 4 :

L'appareillage est constitué par un autoclave de 7,5 litres muni :

— d'un système de chauffage par fluide caloporteur,

— d'un agitateur ruban hélicoïdal (vitesse 60 tours/min),

— d'un système permettant la mise sous pression d'azote,

— d'un circuit permettant de condenser et de recueillir les produits volatils.

Dans l'autoclave préchauffé à 75 °C on introduit :

— solution de sel de l'acide dimère et de la polyoxypropylènediamine de poids moléculaire 2065 à 33,33 % en poids dans le mélange eau/caprolactame 50/50 (en poids) de l'essai 2, partie 1 : 4 400 g,

— solution aqueuse de caprolactame à 60 % en poids : 1 150 g,

— antioxydant commercialisé sous la marque déposée IRGANOX 1010 par la Société CIBA GEIGY : 14,7 g,

— antimousse silicone : 0,5 $cm^3$.

On laisse homogénéiser la masse durant 15 minutes et on effectue trois purges à l'azote pour mise sous pression de $3.10^5$ Pa, puis décompression. La température de la masse agitée est élevée progressivement en 90 minutes environ jusqu'à 150 °C tout en assurant une distillation régulière de l'eau. On maintient la température de la masse vers 150 °C jusqu'à ce que le poids de distillat atteigne 1 782 g (92,5 % de l'eau des solutions).

On élève ensuite progressivement la température de la masse jusqu'à 250 °C en 45 minutes. La température de la masse agitée est maintenue durant une heure à 250 °C.

On établit alors progressivement en 40 minutes une pression de $66{,}7.10^2$ Pa tout en maintenant la masse en homogénéisation à 250 °C. La masse est homogénéisée durant une heure à 250 °C sous une pression de $66{,}7.10^2$ Pa. Durant la phase de réaction sous pression réduite, on recueille par distillation 720 g de caprolactame.

L'agitation est arrêtée, puis on établit dans l'autoclave une pression d'azote de $3.10^5$ Pa et on soutire le polymère. Le polymère très fluide extrudé de l'autoclave est recueilli dans de l'eau froide puis découpé et séché.

Le polymère obtenu est transparent de couleur jaune pâle et présente les caractéristiques suivantes mesurées après séchage :

— viscosité à l'état fondu à 230 °C sous un gradient de cisaillement $\gamma = 10 s^{-1}$ : 48 Pas,

— point de fusion (Tf) : 210,5 °C,

— point de cristallisation au refroidissement (Tc) : 153 °C,

— $\Delta$ = Tf — Tc : 57,5 °C,

— tg$\alpha$ : 20.

Exemple 1

Dans cet exemple on illustre la modification apportée au contenu de la demande française 83/10 939 consistant à faire appel à une polyoxyalkylènediamine en mélange avec une triamine.

1. Préparation du sel de dimère d'acide gras et d'un mélange de polyoxypropylènediamine de masse moléculaire égale à 2065 et de polyoxypropylènetriamine de masse moléculaire égale à 450, en solution à 33,33 % en poids dans le mélange eau/caprolactame 50/50 (en poids) :

Dans un ballon en verre de 10 litres muni d'un agitateur hélice (trois pales ; vitesse de rotation : 100 tours/min), d'une ampoule d'addition et pouvant travailler sous atmosphère d'azote, sont chargés sous agitation :

— eau permutée : 1 500 g

— caprolactame pur : 1 500 g

— polyoxypropylènediamine de masse moléculaire égale à 2065 commercialisée par la Société BASF sous la dénomination ETHERDIAMINE 2000 : 1 168,5 g

— polyoxypropylènetriamine de formule (II) dans laquelle la somme x + y + z est voisine de 5,3 ayant une masse moléculaire de 450, commercialisée par la Société TEXACO sous la dénomination JEFFAMINE T 403 : 8,5 g

Le mélange est homogénéisé durant environ une heure et le volume libre du ballon est purgé par de l'azote.

On introduit dans la solution agitée, par coulée régulière en 30 minutes environ, 323 g de dimère d'acide gras commercialisé sous la marque déposée PRIPOL 1010 par la Société UNICHEMA CHEMIE et ayant un taux de monomère de 0,03 % et un taux de trimère de 3 %. La solution est homogénéisée durant 30 minutes.

On effectue un petit prélèvement d'environ 10 $cm^3$ que l'on dilue par un mélange eau/isopropanol (42,85/57,15 en poids) de façon à amener la concentration du sel de l'acide dimère et des polyoxypropylèneamines à 10 % en poids. La valeur du pH à 20 °C de cette solution diluée est supérieure à celle du pH au point d'équivalence.

Dans la solution concentrée, on introduit 27 g du dimère d'acide gras et 54 g d'une solution aqueuse à 50 % de caprolactame. La solution est homogénéisée durant 30 minutes, puis on effectue à nouveau une mesure du pH en solution diluée à 10 % en sel comme précédemment. La valeur du pH de la solution diluée atteint, à plus ou moins cinq centièmes d'unité pH, celle du pH au point d'équivalence.

La solution concentrée, ainsi ajustée, est conservée à 25 °C sous atmosphère d'azote.

2. Préparation d'un copolyétheramide caprolactame/acide dimère-polyoxypropylènediamine de masse moléculaire 2065-polyoxypropylènetriamine de masse moléculaire 450, de composition pondérale voisine de 50/50 (blocs amides/blocs éthers) et présentant une teneur en triamine voisine de 6,3 millimoles/kg :

L'appareillage est constitué par un autoclave de 7,5 litres muni :

— d'un système de chauffage par fluide caloporteur,

— d'un agitateur ruban hélicoïdal (vitesse 60 tours/min),

— d'un système permettant la mise sous pression d'azote,

— d'un circuit permettant de condenser et de recueillir les produits volatils.

Dans l'autoclave préchauffé à 75 °C on introduit :

— solution de sel de l'acide dimère et des polyoxypropylèneamines à 33,33 % en poids dans le mélange eau/caprolactame 50/50 (en poids) de l'exemple 1, partie 1 : 4 500 g

— solution aqueuse de caprolactame à 60 % en poids : 475 g

— antioxydant commercialisé sous la marque déposée IRGANOX 1010 par la Société CIBA GEIGY : 15 g

— acide hypophosphoreux en solution aqueuse à 50 % en poids : 3 g

— antimousse silicone : 0,5 $cm^3$.

On laisse homogénéiser la masse durant 15 minutes et on effectue trois purges à l'azote par mise sous pression de $3.10^5$ Pa, puis décompression. La température de la masse agitée est élevée progressivement en 90 minutes environ jusqu'à 150 °C tout en assurant une distillation régulière de l'eau. On maintient la température de la masse vers 150 °C jusqu'à ce que le poids de distillat atteigne 1 565 g (92,5 % de l'eau des solutions).

On élève ensuite progressivement la température de la masse jusqu'à 250 °C en 45 minutes. La température de la masse agitée dans l'autoclave est maintenue durant une heure à 250 °C.

On établit alors, progressivement en 40 minutes une pression de $72.10^2$ Pa tout en maintenant la masse en homogénéisation à 250 °C. La masse est homogénéisée durant une heure à 250 °C sous une pression de $72.10^2$ Pa. Durant la phase de réaction sous pression réduite, on recueille par distillation 330 g de caprolactame.

L'agitation est arrêtée, puis on établit dans l'autoclave une pression d'azote de $5.10^5$ Pa et on soutire le polymère. Ce dernier, extrudé de l'autoclave sous forme de jonc, est refroidi par passage dans un bain d'eau froide, puis il est granulé et séché.

Le polymère obtenu est transparent, légèrement opalescent, presque incolore.

Il présente les caractéristiques suivantes mesurées sur granulés secs :

— point de fusion (Tf) : 210 °C

— point de cristallisation au refroidissement (Tc) : 145 °C

— $\Delta$ = Tf — Tc : 65 °C

— tg α : 13

— viscosité à l'état fondu à 230 °C sous un gradient de cisaillement $\gamma = 10s^{-1}$ : 1 300 Pas.

Les caractéristiques physiques et mécaniques mesurées sur éprouvettes moulées par injection et conditionnées sont les suivantes :

— température de transition vitreuse à EHO : — 69 °C

— module en torsion à EHO :

à + 20 °C : 54 MPa

à — 20 °C : 110 MPa.

## Exemple 2

Préparation d'un copolyétheramide caprolactame/acide dimère-polyoxypropylènediamine de masse moléculaire égale à 2065 polyoxypropylènetriamine de masse moléculalire 450, de composition pondérale voisine de 50/50 (blocs amides/blocs éthers) et présentant une teneur en triamine voisine de 2,5 millimoles/kg :

On opère suivant le mode opératoire général de l'exemple 1, partie 2 mais en utilisant les charges suivantes :

— solution de sel de l'acide dimère et du mélange de polyoxypropylènediamine et de polyoxypropylènetriamine à 33,33 % en poids dans le mélange eau caprolactame 50/50 (en poids) telle qu'elle est préparée à l'exemple 1, partie 1 : 1 785 g

— solution de sel de l'acide dimère et de la polyoxypropylènediamine à 33,33 % en poids dans le mélange eau/caprolactame 50/50 (en poids) telle qu'elle est préparée dans l'essai 2, partie 1 : 2 715 g

— solution aqueuse de caprolactame à 60 % en poids : 475 g

— antioxydant commercialisé sous la marque déposée IRGANOX 1010 par la Société CIBA GEIGY : 15 g

— acide hypophosphoreux en solution aqueuse à 50 % en poids : 3 g

— antimousse silicone : 0,5 $cm^3$.

Durant la phase de réaction sous pression réduite, on recueille par distillation 320 g de caprolactame.

Le polymère obtenu transparent, légèrement opalescent, presque incolore présente les caractéristiques suivantes mesurées sur granulés secs :

— point de fusion (Tf) : 210 °C

— point de cristallisation au refroidissement (Tc) : 148 °C

— Δ = Tf — Tc : 62 °C

— tg α : 21

— viscosité à l'état fondu à 230 °C sous un gradient de cisaillement $\gamma = 10s^{-1}$ : 500 Pas.

## Exemple 3

Dans cet exemple on illustre la modification apportée au contenu de la demande française 83/10 939 consistant à réaliser l'ajustement de la stœchiométrrie de la solution de sel de dimère d'acide gras et de polyoxyalkylèneamine en présence du catalyseur.

1. Préparation du sel de dimère d'acide gras et d'une polyoxypropylènediamine de masse moléculaire égale à 2072 en solution à 33,33 % en poids dans le mélange eau/caprolactame 50/50 (en poids), en présence d'acide phénylphosphoneux [$C_6H_5P(O)HOH$] :

Dans un ballon en verre de 10 litres équipé comme celui décrit à l'exemple 1, partie 1 sont chargés sous agitation :

— eau permutée : 1 490 g

— caprolactame pur : 1 525 g

— polyoxypropylènediamine de masse moléculaire égale à 2072 commercialisée par la Société TEXACO sous la dénomination JEFFAMINE D 2000 : 1 205 g

— solution aqueuse d'acide phénylphosphoneux à 20 % : 44 g

Le mélange est homogénéisé durant environ une heure et le volume libre du ballon est purgé par de l'azote.

On introduit dans la solution agitée, par coulée régulière en 30 minutes environ, 320 g de dimère d'acide gras commercialisée sous la marque déposée PRIPOL 1010 par la Société UNICHEMA CHEMIE et ayant un taux de monomère de 0,03 % et un taux de trimère de 3 %. La solution est homogénéisée durant 30 minutes.

On effectue un petit prélèvement de 10 $cm^3$ environ que l'on dilue par un mélange eau/isopropanol (42,85/57,15 en poids) de façon à amener la concentration du sel de l'acide dimère et de la polyoxypropylènediamine à 10 % en poids. La valeur du pH à 20 °C de cette solution diluée est inférieure à celle du pH au point d'équivalence.

Dans la solution concentrée, on introduit 45,9 g d'une solution de la polyoxypropylènediamine à 33,33 % en poids dans un mélange eau/caprolactame 50/50 (en poids). La solution est homogénéisée durant 30 minutes, puis on effectue à nouveau une mesure du pH en solution diluée à 10 % en sel comme

précédemment. La valeur du pH de la solution diluée atteint, à plus ou moins cinq centièmes d'unité pH, celle du pH au point d'équivalence.

La solution concentrée, ainsi ajustée, est conservée à 25 °C sous atmosphère d'azote.

2. Préparation d'un copolyétheramide caprolactame/acide dimère-polyoxypropylènediamine de masse moléculaire 2072, de composition pondérale voisine de 50/50 (blocs amides/blocs éthers).

Dans l'autoclave tel que décrit à l'exemple 1, partie 2, préchauffé à 75 °C, on introduit :

— solution de sel de l'acide dimère et de la polyoxypropylènediamine de la partie 1, préparée à 33,33 % en poids dans le mélange eau/caprolactame 50/50 (en poids) en présence d'acide phénylphosphoneux : 4 500 g

— solution aqueuse de caprolactame à 60 % en poids : 550 g

— antimousse silicone : 0,5 $cm^3$.

On laisse homogénéiser la masse durant 15 minutes et on effectue trois purges à l'azote par mise sous pression de $3.10^5$ Pa, puis décompression. La température de la masse agitée est élevée en 30 minutes à 115 °C sous pression autogène. La pression atteinte est de $2.10^5$ Pa (pression absolue).

On distille régulièrement, en une heure, sous cette pression, 1 485 g d'eau ; la température de la masse s'élevant pendant ce temps, progressivement jusqu'à 137 °C. On décomprime jusqu'à pression atmosphérique en 10 minutes tout en portant la température de la masse à 150 °C. Durant cette phase, on recueille 160 g de distillat.

On élève ensuite progressivement la température de la masse jusqu'à 250 °C en une heure. La température de la masse agitée est maintenue durant une heure à 250 °C sous pression atmosphérique.

On établit alors, progressivement en une heure une pression de $66.10^2$ Pa tout en maintenant la masse en homogénéisation à 250 °C. La masse est homogénéisée durant 20 minutes à 250 °C sous une pression de $66.10^2$ Pa. Durant la phase de réaction sous pression réduite, on recueille par distillation 360 g de caprolactame.

L'agitation est arrêtée, puis on établit dans l'autoclave une pression d'azote de $7.10^5$ Pa et on soutire le polymère. Ce dernier, extrudé de l'autoclave sous forme de jonc, est refroidi par passage dans un bain d'eau froide, puis il est granulé et séché.

Le polymère obtenu est transparent, légèrement opalescent, incolore.

Il présente les caractéristiques suivantes mesurées sur granulés secs :

— point de fusion (Tf) : 209,5 °C

— point de cristallisation au refroidissement (Tc) : 142,5 °C

— $\Delta$ = Tf — Tc : 67 °C

— tg $\alpha$ : 10,5

— viscosité à l'état fondu à 230 °C sous un gradient de cisaillement $\gamma = 10s^{-1}$ : 5500 Pas

Exemple 4

Dans cet exemple on illustre la modification apportée au contenu de la demande française 83/10 939 consistant à utiliser un catalyseur à base d'un sel alcalin d'un oxyacide.

1. Préparation du sel d'une polyoxypropylènediamine de masse moléculaire égale à 2072 et du dimère d'acide gras en solution à 33,33 % en poids dans le mélange eau/caprolactame 50/50 (en poids) :

On utilise l'acide dimère et la polyoxypropylènediamine de l'exemple 3 pour préparer cette solution suivant le mode opératoire général décrit à l'essai 2, partie 1.

2. Préparation d'un copolyétheramide caprolactame/acide dimère-polyoxypropylènediamine de masse moléculaire 2072, de composition pondérale voisine de 50/50 (blocs amides/blocs éthers) en présence de phénylphosphonite de sodium [$C_6H_5P(O)HONa$] :

On opère selon le mode opératoire de l'exemple 3, partie 2 en utilisant les charges suivantes :

— solution de sel de l'acide dimère et de la polyoxypropylènediamine de la partie 1, préparée à 33,33 % en poids dans le mélange eau/caprolactame 50/50 (en poids) : 4 500 g

— solution aqueuse de caprolactame à 66 % : 540 g

— solution aqueuse à 20 % de phénylphosphonite de sodium : 45 g

— antimousse silicone : 0,5 $cm^3$.

La quantité de caprolactame recueillie durant la phase de réaction sous pression réduite est de 440 g.

Le polymère soutiré sous pression d'azote, après la phase finale de polymérisation de 20 minutes à 250 °C sous une pression de $66.10^2$ Pa, est transparent, légèrement opalescent et incolore.

Il présente les caractéristiques suivantes mesurées sur granulés secs :

— point de fusion (Tf) : 208 °C

— point de cristallisation au refroidissement (Tc) : 150 °C

— $\Delta$ = Tf — Tc : 58 °C

— tg $\alpha$ : 18

— viscosité à l'état fondu à 230 °C sous un gradient de cisaillement $\gamma = 10s^{-1}$ : 5 000 Pas.

La comparaison des caractéristiques des copolyétheramides des exemples 3 et 4 met en évidence l'effet favorable du catalyseur à base d'un sel acide fort sur l'aptitude à la cristallisation du polyétheramide : pour une viscosité à l'état fondu du même ordre, la surfusion est abaissée de 9 °C et la tg est multipliée par un facteur 1,7 quand on remplace l'acide phénylphosphoneux par son sel de sodium.

Exemple 5

Cet exemple illustre l'aspect de l'invention combinant l'emploi d'une triamine dans la composition des réactifs générateurs du copolyétheramide et l'emploi d'un sel d'oxyacide comme catalyseur durant la polymérisation.

Préparation d'un copolyétheramide caprolactame/acide dimère-polyoxypropylènediamine de masse moléculaire 2065-polyoxypropylènetriamine de masse moléculaire 450, de composition pondérale voisine de 50/50 (blocs amides/blocs éthers), présentant une teneur en triamine voisine de 2,5 millimoles/kg, et polymérisé en présence de phénylphosphonite de sodium.

On opère suivant le mode opératoire général de l'exemple 1, partie 2, mais en utilisant les charges suivantes :

— solution de sel de l'acide dimère et du mélange de polyoxypropylènediamine et de polyoxypropylènetriamine à 33,33 % en poids dans le mélange eau/caprolactame 50/50 (en poids) telle qu'elle est préparée à l'exemple 1, partie 1 : 1 785 g ;

— solution de sel de l'acide dimère et de la polyoxypropylènediamine à 33,33 % en poids dans le mélange eau/caprolactame 50/50 (en poids) telle qu'elle est préparée dans l'essai 2, partie 1 : 2 715 g ;

— solution aqueuse de caprolactame à 60 % en poids : 475 g ;

— solution aqueuse à 20 % de phénylphosphonite de sodium : 7,5 g ;

— antimousse silicone : 0,5 $cm^3$.

Durant la phase de polymérisation sous pression réduite, on recueille par distillation 320 g de caprolactame. Le polymère obtenu est transparent, légèrement opalescent, incolore.

Il présente les caractéristiques suivantes mesurées sur granulés secs :

— point de fusion Tf : 210 °C ;

— point de cristallisation au refroidissement (Tc) : 153 °C ;

— $\Delta = Tf - Tc$ : 57 °C ;

— tg $\alpha$ : 25 ;

— viscosité à l'état fondu à 230 °C sous un gradient de cisaillement $\gamma = 10 s^{-1}$ : 800 Pas.

## Revendications

1. Copolyétheramides homogènes, à structure bloc, présentant notamment un point de fusion ou de ramollissement au moins égal à 170 °C, une température de transition vitreuse mesurée à EHO au plus égale à — 5 °C et une viscosité à l'état fondu au moins égale à 50 Pas, lesdits copolyétheramides étant susceptibles d'être obtenus conformément au mode opératoire défini par les étapes suivantes :

a') on mélange un lactame ayant de 4 à 12 atomes de carbone avec une solution d'un sel de dimère d'acide gras et d'un composé aminé approprié dans un milieu de dissolution à base d'un mélange eau-alcool aliphatique ayant moins de 5 atomes de carbone, d'un mélange eau-alcool-lactame (l'alcool et le lactame utilisés répondant l'un et l'autre aux définitions données ci-avant), de lactame lui-même à l'état fondu ou encore, quand le lactame est soluble dans l'eau, d'un mélange eau-lactame ;

b') la stœchiométrie dudit sel ayant été établie au préalable en mesurant le pH de la solution du sel dans un mélange diluant à base d'eau et d'au moins un composé choisi parmi un alcool aliphatique, un diol aliphatique ou un lactame (l'alcool et le lactame utilisés répondant l'un et l'autre aux définitions données ci-avant, le diol aliphatique comportant de 2 à 6 atomes de carbone) et en ajustant la composition dudit sel de manière à ce que le pH atteigne, à ± 0,05 unité pH, la valeur de pH au point d'équivalence, le mélange de la solution du sel avec le lactame pouvant être omis lorsque la solution du sel dans le milieu de dissolution à base d'un mélange eau-alcool-lactame, d'un mélange eau-lactame ou de lactame lui-même à l'état fondu contient suffisamment de lactame pour obtenir le copolyétheramide de composition souhaitée ;

c') puis on ajoute dans le mélange réactionnel un catalyseur ;

d') et on soumet ensuite l'ensemble à un chauffage pour faire réagir le lactame avec le sel ; lesdits copolyétheramides étant caractérisés en ce que l'on met en œuvre dans l'étape (a') un sel de dimère d'acide gras et d'un mélange de polyoxyalkylènediamine avec une triamine et que l'on utilise dans l'étape (c') un catalyseur consistant soit en un composé (alpha), soit en un composé (bêta), (alpha) désignant un oxyacide minéral ou un oxyacide organique autre qu'un acide carboxylique, dont l'une au moins des fonctions acides, quand il y en a plusieurs, possède une constante d'ionisation pka dans l'eau à 25 °C égale ou inférieure à 4, (bêta) désignant un sel alcalin ou alcalino-ferreux de cet acide.

2. Copolyétheramides homogènes, à structure bloc, présentant notamment un point de fusion ou de ramollissement au moins égal à 170 °C, une température de transition vitreuse mesurée à EHO au plus égale à — 5 °C et une viscosité à l'état fondu au moins égale à 50 Pas, lesdits copolyétheramides étant susceptibles d'être obtenus conformément au mode opératoire défini par les étapes suivantes :

a') on mélange un lactame ayant de 4 à 12 atomes de carbone avec une solution d'un sel de dimère d'acide gras et d'un composé aminé approprié dans un milieu de dissolution à base d'un mélange eau-alcool aliphatique ayant moins de 5 atomes de carbone, d'un mélange eau-alcool-lactame (l'alcool et le

lactame utilisés répondant l'un et l'autre aux définitions données ci-avant), de lactame lui-même à l'état fondu ou encore, quand le lactame est soluble dans l'eau, d'un mélange eau-lactame ;

b') la stœchiométrie dudit sel ayant été établie au préalable en mesurant le pH de la solution du sel dans un mélange diluant à base d'eau et d'au moins un composé choisi parmi un alcool aliphatique, un diol aliphatique, un diol aliphatique ou un lactame (l'alcool et le lactame utilisés répondant l'un et l'autre aux définitions données ci-avant, le diol aliphatique comportant de 2 à 6 atomes de carbone) et en ajustant la composition dudit sel de manière à ce que le pH atteigne, à ± 0,05 unité pH, la valeur de pH au point d'équivalence, le mélange de la solution du sel avec le lactame pouvant être omis lorsque la solution du sel dans le milieu de dissolution à base d'un mélange eau-alcool-lactame, d'un mélange eau-lactame ou de lactame lui-même à l'état fondu contient suffisamment de lactame pour obtenir le copolyétheramide de composition souhaitée ;

c') puis on ajoute dans le mélange réactionnel un catalyseur ;

d') et on soumet ensuite l'ensemble à un chauffage pour faire réagir le lactame avec le sel ; lesdits copolyétheramides étant caractérisées en ce que l'on met en œuvre dans l'étape (a') un sel de dimère d'acide gras et de polyoxyalkylènediamine sans triamine et que l'on utilise dans l'étape (c') un catalyseur consistant dans le composé (bêta), tel que défini ci-avant dans la revendication 1.

3. Copolyétheramides homogènes, à structure bloc, présentant notamment un point de fusion ou de ramollissement au moins égal à 170 °C, une température de transition vitreuse mesurée à EHO au plus égale à — 5 °C et une viscosité à l'état fondu au moins égale à 50 Pas, lesdits copolyétheramides étant susceptibles d'être obtenus conformément au mode opératoire défini par les étapes suivantes :

a'') on mélange un lactame ayant de 4 à 12 atomes de carbone avec une solution d'un sel de dimère d'acide gras et d'un composé aminé approprié dans un milieu de dissolution à base d'un mélange eau-alcool aliphatique ayant moins de 5 atomes de carbone, d'un mélange eau-alcool-lactame (l'alcool et le lactame utilisés répondant l'un et l'autre aux définitions données ci-avant), de lactame lui-même à l'état fondu ou encore, quand le lactame est soluble dans l'eau, d'un mélange eau-lactame ;

b'') la stœchiométrie de ladite solution ayant été établie au préalable en mesurant le pH de la solution dans un mélange diluant à base d'eau et d'au moins un composé choisi parmi un alcool aliphatique, un diol aliphatique ou un lactame (l'alcool et le lactame utilisés répondant l'un et l'autre aux définitions données ci-avant, le diol aliphatique comportant de 2 à 6 atomes de carbone) et en ajustant la composition de manière à ce que le pH atteigne, à ± 0,05 unité pH, la valeur de pH au point d'équivalence, le mélange de la solution du sel avec le lactame pouvant être omis lorsque la solution du sel dans le milieu de dissolution à base d'un mélange eau-alcool-lactame, d'un mélange eau-lactame ou de lactame lui-même à l'état fondu contient suffisamment de lactame pour obtenir le copolyétheramide de composition souhaitée ;

c'') puis on fait réagir par chauffage le lactame avec le sel en présence d'un catalyseur ; lesdits copolyétheramides étant caractérisés en ce que le catalyseur utilisé est ajouté dans la solution du sel de dimère d'acide gras et de composé aminé avant de procéder au réglage de la stœchiométrie de ladite solution, le composé aminé consistant dans une polyoxyalkylènediamine prise seule ou en mélange avec une triamine et le catalyseur consistant soit dans le composé (alpha), soit dans le composé (bêta), tel que défini ci-avant dans la revendication 1.

4. Copolyétheramides selon l'une quelconque des revendications 1 et 3, caractérisés en ce que la triamine à laquelle on fait appel dans l'étape (a') ou (a'') est un composé pris dans le groupe formé par la bis-hexaméthylènetriamine de formule $H_2N—(CH_2)_6—NH—(CH_2)_6—NH_2$ et les polyoxyalkylènetriamines répondant à la formule générale :

$$R_1 \left[ (OCH_2\underset{X}{\underset{|}{CH}})_n - O\underset{Y}{\underset{|}{CH}} - \underset{Z}{\underset{|}{CH}} - NH_2 \right]_3 \qquad (I)$$

dans laquelle :

$R_1$ est un radical trivalent qui est le résidu d'un alcool aliphatique trihydroxylé capable d'être polyoxyalkylé, ayant de 3 à 10 atomes de carbone ;

— Z est un radical alkyle linéaire ou ramifié contenant 1 à 18 atomes de carbone ;

— X et Y, identiques ou différents, représentent chacun un atome d'hydrogène ou un radical Z ;

— le symbole n représente un nombre moyen allant de 0 à 50.

5. Copolyétheramides selon l'une quelconque des revendications 1 et 3, caractérisés en ce que le triamine à laquelle on fait appel dans l'étape (a') ou (a'') est un composé répondant à la formule (I) dans laquelle : $R_1$ a la définition donnée ci-avant dans la revendication 4 ; Z est un radical méthyle ; X représente Z ; Y est un atome d'hydrogène et n a une valeur moyenne allant de 1 à 16.

6. Copolyétheramides selon la revendication 5, caractérisés en ce que la triamine est une polyoxypropylènetriamine répondant à la formule

(Voir formule page 16)

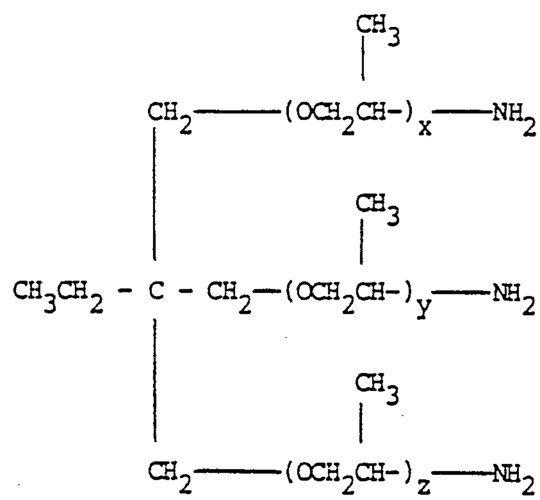

(II)

dans laquelle les symboles x, y et z représentent chacun un nombre moyen allant de 1 à 10, avec la somme x + y + z allant de 3 à 30.

7. Copolyétheramides selon l'une quelconque des revendications 1 et 3 à 6, caractérisés en ce que les proportions de triamine engagées, exprimées en nombre de millimole de triamine pour 1 kilogramme de copolyétheramide final, sont comprises généralement entre 0,1 et 20, de préférence, entre 1 et 10.

8. Copolyétheramides selon l'une quelconque des revendications 1 et 3 à 7, caractérisés en ce que le catalyseur (alpha) auquel on fait appel consiste dans les espèces suivantes :

— parmi les oxyacides minéraux : les acides sulfureux, sulfurique, hypophosphoreux, phosphoreux, orthophosphorique ou pyrophosphorique ;

— parmi les oxyacides organiques :

— les acides organosulfoniques de formule $R_2—SO_3H$ (III) dans laquelle $R_2$ représente : un radical alkyle linéaire ou ramifié ayant de 1 à 6 atomes de carbone ; un radical phényle éventuellement substitué par 1 à 3 radicaux alkyles ayant de 1 à 3 atomes de carbone ; un radical phénylalkyle comportant de 1 à 3 atomes de carbone dans le reste alkyle et dont le noyau benzénique peut éventuellement être substitué par 1 à 3 radicaux alkyles ayant de 1 à 3 atomes de carbone ; ou un radical naphtyle éventuellement substitué par 1 à 4 radicaux alkyles ayant de 1 à 3 atomes de carbone ;

— les acides organosphosphoniques de formule $R_3—P(O)(OH)_2$ (IV) dans laquelle $R_3$ représente un radical alkyle, un radical phényle ou un radical phénylalkyle, chacun de ces radicaux ayant la définition donnée ci-avant pour $R_2$ ;

— les acides organosphosphiniques de formule $R_4R_5—P(O)(OH)$ (V) dans laquelle $R_4$ et $R_5$, identiques ou différents, représentent chacun : un radical alkyle linéaire ayant de 1 à 3 atomes de carbone ; un radical phényle ou un radical phénylalkyle, chacun de ces deux derniers radicaux ayant la définition donnée ci-avant pour $R_2$ ;

— les acides organophosphoneux de formule $R_6H—P(O)(OH)$ (VI) dans laquelle $R_6$ représente : un radical alkyle linéaire ou ramifié ayant de 1 à 4 atomes de carbone (la ramification étant exclue pour un radical alkyle à 4 atomes de carbone) ; un radical phényle ou un radical phénylalkyle, chacun de ces deux derniers radicaux ayant la définition donnée ci-avant pour $R_2$.

9. Copolyétheramides selon la revendication 8, caractérisés en ce que les acides (alpha) auxquels on fait appel consistent dans les acides dérivés du phosphore appartenant au groupe des acides hypophosphoreux, phosphoreux, orthophosphorique, pyrophosphorique, méthylphosphonique, phénylphosphonique, benzylphosphonique, diméthylphosphinique, diphénylphosphinique, méthylphénylphosphinique, dibenzylphosphinique, méthylphosphoneux, phénylphosphoneux ou benzylphosphoneux.

10. Copolyétheramides selon l'une quelconque des revendications 1 à 7, caractérisés en ce que le catalyseur (bêta) auquel on fait appel consiste dans les sels de sodium et de potassium issus des acides cités ci-avant dans la revendication 8 et, de préférence, dans les sels de sodium et de potassium issus des acides dérivés du phosphore cités ci-avant dans la revendication 9.

11. Copolyétheramides selon l'une quelconque des revendications 8 à 10, caractérisés en ce que les proportions d'acide fort (alpha) ou de sel (bêta), exprimées en pourcentage en poids par rapport au copolyétheramide final, sont comprises généralement entre 0,01 et 1 % et de préférence entre 0,01 et 0,5 %.

12. Copolyétheramides selon l'une quelconque des revendications 1 à 11, caractérisés en ce que le lactame auquel on fait appel est l'ε-caprolactame.

13. Copolyétheramides selon l'une quelconque des revendications 1 à 12, caractérisés en ce que les acides dimères employés sont obtenus par polymérisation et fractionnement de composés comprenant 80 à 100 % en poids d'acide(s) gras monomère(s) ayant de 16 à 20 atomes de carbone et 20 à 0 % en poids d'acide(s) gras monomère(s) ayant de 8 à 15 atomes de carbone et/ou de 21 à 24 atomes de carbone,

lesdits acides dimères comprenant une fraction en acide difonctionnel qui est supérieure à 94 % en poids, une fraction en acide monofonctionnel qui est inférieure à 1 % en poids et une fraction en acide de fonctionnalité supérieure à 2 qui est inférieure à 5 % en poids.

14. Copolyétheramides selon la revendication 13, caractérisés en ce que les acides dimères auxquels on fait appel consistent dans les espèces obtenues par fractionnement d'une composition hydrogénée issue de la polymérisation catalytique d'acide(s) gras monomère(s) ayant 18 atomes carbone.

15. Copolyétheramides selon l'une quelconque des revendications 1 à 14, caractérisés en ce que les polyoxyalkylènediamines auxquelles on fait appel sont des composés de formule générale :

$$H_2N—R_7—(OR_8)_m—OR_9—NH_2 \quad (VII)$$

dans laquelle les symboles $R_7$, $R_8$, $R_9$, identiques ou différents, représentent des radicaux aliphatiques saturés divalents, linéaires ou ramifiés, comportant de 1 à 10 atomes de carbone et le symbole m est un nombre déterminé de manière à procurer une masse moléculaire allant de 100 à 10 000 et, de préférence, allant de 300 à 5 000.

16. Copolyétheramides selon la revendication 15, caractérisés en ce que les polyoxyalkylènediamines auxquelles on fait appel comprennent des polyoxypropylènediamines de formule (VII) dans laquelle

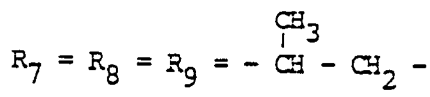

des polyoxyéthylènediamines de formule (VII) dans laquelle

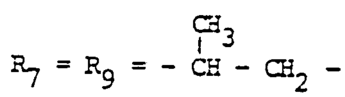

et $R_8$ = $—CH_2—CH_2—$ ou des polyoxytétraméthylènediamines de formule (VII) dans laquelle

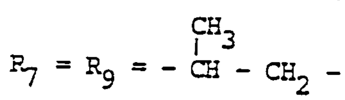

et $R_8$ = $—CH_2—CH_2—CH_2—CH_2—$, ces composés ayant une masse moléculaire allant de 100 à 10 000 et, de préférence, allant de 300 à 5 000.

17. Copolyétheramides selon l'une quelconque des revendications 1 à 16, caractérisés en ce que les proportions pondérales de blocs amides dans le polymère final sont comprises entre 15 et 85 % et, de préférence, entre 40 et 60 % et les proportions pondérales de blocs éthers sont comprises entre 85 et 15 % et, de préférence, entre 60 et 40 %.

**Revendications** (pour l'Etat contractant AT)

1. Procédé de préparation de copolyétheramides homogènes, à structure bloc, présentant notamment un point de fusion ou de ramollissement au moins égal à 170 °C, une température de transition vitreuse mesurée à EHO au plus égale à — 5 °C et une viscosité à l'état fondu au moins égale à 50 Pas, ledit procédé étant conduit conformément au mode opératoire défini par les étapes suivantes :

a') on mélange un lactame ayant de 4 à 12 atomes de carbone avec une solution d'un sel de dimère d'acide gras et d'un composé aminé approprié dans un milieu de dissolution à base d'un mélange eau-alcool aliphatique ayant moins de 5 atomes de carbone, d'un mélange eau-alcool-lactame (l'alcool et le lactame utilisés répondant l'un et l'autre aux définitions données ci-avant), de lactame lui-même à l'état fondu ou encore, quand le lactame est soluble dans l'eau, d'un mélange eau-lactame ;

b') la stœchiométrie dudit sel ayant été établie au préalable en mesurant le pH de la solution du sel dans un mélange diluant à base d'eau et d'au moins un composé choisi parmi un alcool aliphatique, un diol aliphatique ou un lactame (l'alcool et le lactame utilisés répondant l'un et l'autre aux définitions données ci-avant, le diol aliphatique comportant de 2 à 6 atomes de carbone) et en ajustant la composition dudit sel de manière à ce que le pH atteigne, à ± 0,05 unité pH, la valeur de pH au point d'équivalence, le mélange de la solution du sel avec le lactame pouvant être omis lorsque la solution du sel dans le milieu de dissolution à base d'un mélange eau-alcool-lactame, d'un mélange eau-lactame ou de lactame lui-même à l'état fondu contient suffisamment de lactame pour obtenir le copolyétheramide de composition souhaitée ;

c') puis on ajoute dans le mélange réactionnel un catalyseur ;

d') et on soumet ensuite l'ensemble à un chauffage pour faire réagir le lactame avec le sel ; ledit procédé étant caractérisé en ce que l'on met en œuvre dans l'étape (a') un sel de dimère d'acide gras et

d'un mélange de polyoxyalkylènediamine avec une triamine et que l'on utilise dans l'étape (c') un catalyseur consistant soit en un composé (alpha), soit en un composé (béta), (alpha) désignant un oxyacide minéral ou un oxyacide organique autre qu'un acide carboxylique, dont l'une au moins des fonctions acides, quand il y en a plusieurs, possède une constante d'ionisation pka dans l'eau à 25 °C égale ou inférieure à 4, (béta) désignant un sel alcalin ou alcalino-terreux de cet acide.

2. Procédé de préparation de copolyétheramides homogènes, à structure bloc, présentant notamment un point de fusion ou de ramollissement au moins égal à 170 °C, une température de transition vitreuse mesurée à EHO au plus égale à — 5 °C et une viscosité à l'état fondu au moins égale à 50 Pas, ledit procédé étant conduit conformément au mode opératoire défini par les étapes suivantes :

a') on mélange un lactame ayant de 4 à 12 atomes de carbone avec une solution d'un sel de dimère d'acide gras et d'un composé aminé approprié dans un milieu de dissolution à base d'un mélange eau-alcool aliphatique ayant moins de 5 atomes de carbone, d'un mélange eau-alcool-lactame (l'alcool et le lactame utilisés répondant l'un et l'autre aux définitions données ci-avant), de lactame lui-même à l'état fondu ou encore, quand le lactame est soluble dans l'eau, d'un mélange eau-lactame ;

b') la stœchiométrie dudit sel ayant été établie au préalable en mesurant le pH de la solution du sel dans un mélange diluant à base d'eau et d'au moins un composé choisi parmi un alcool aliphatique, un diol aliphatique ou un lactame (l'alcool et le lactame utilisés répondant l'un et l'autre aux définitions données ci-avant, le diol aliphatique comportant de 2 à 6 atomes de carbone) et en ajustant la composition dudit sel de manière à ce que le pH atteigne, à ± 0,05 unité pH, la valeur de pH au point d'équivalence, le mélange de la solution du sel avec le lactame pouvant être omis lorsque la solution du sel dans le milieu de dissolution à base d'un mélange eau-alcool-lactame, d'un mélange eau-lactame ou de lactame lui-même à l'état fondu contient suffisamment de lactame pour obtenir le copolyétheramide de composition souhaitée ;

c') puis on ajoute dans le mélange réactionnel un catalyseur ;

d') et on soumet ensuite l'ensemble à un chauffage pour faire réagir le lactame avec le sel ; ledit procédé étant caractérisé en ce que l'on met en œuvre dans l'étape (a') un sel de dimère d'acide gras et de polyoxyalkylènediamine sans triamine et que l'on utilise dans l'étape (c') un catalyseur consistant dans le composé (béta), tel que défini ci-avant dans la revendication 1.

3. Procédé de préparation de copolyétheramides homogènes, à structure bloc, présentant notamment un point de fusion ou de ramollissement au moins égal à 170 °C, une température de transition vitreuse mesurée à EHO au plus égale à — 5 °C et une viscosité à l'état fondu au moins égale à 50 Pas, ledit procédé étant conduit conformément au mode opératoire défini par les étapes suivantes :

a") on mélange un lactame ayant de 4 à 12 atomes de carbone avec une solution d'un sel de dimère d'acide gras et d'un composé aminé approprié dans un milieu de dissolution à base d'un mélange eau-alcool aliphatique ayant moins de 5 atomes de carbone, d'un mélange eau-alcool-lactame (l'alcool et le lactame utilisés répondant l'un et l'autre aux définitions données ci-avant), de lactame lui-même à l'état fondu ou encore, quand le lactame est soluble dans l'eau, d'un mélange eau-lactame ;

b") la stœchiométrie de ladite solution ayant été établie au préalable en mesurant le pH de la solution dans un mélange diluant à base d'eau et d'au moins un composé choisi parmi un alcool aliphatique, un diol aliphatique ou un lactame (l'alcool et le lactame utilisés répondant l'un et l'autre aux définitions données ci-avant, le diol aliphatique comportant de 2 à 6 atomes de carbone) et en ajustant la composition de manière à ce que le pH atteigne, à ± 0,05 unité pH, la valeur de pH au point d'équivalence, le mélange de la solution du sel avec le lactame pouvant être omis lorsque la solution du sel dans le milieu de dissolution à base d'un mélange eau-alcool-lactame, d'un mélange eau-lactame ou de lactame lui-même à l'état fondu contient suffisamment de lactame pour obtenir le copolyétheramide de composition souhaitée ;

c") puis on fait réagir par chauffage le lactame avec le sel en présence d'un catalyseur ; ledit procédé étant caractérisé en ce que le catalyseur utilisé est ajouté dans la solution du sel de dimère d'acide gras et de composé aminé avant de procéder au réglage de la stœchiométrie de ladite solution, le composé aminé consistant dans une polyoxyalkylènediamine prise seule ou en mélange avec une triamine et le catalyseur consistant soit dans le composé (alpha), soit dans le composé (béta), tel que défini ci-avant dans la revendication 1.

4. Procédé selon l'une quelconque des revendications 1 et 3, caractérisé en ce que la triamine à laquelle on fait appel dans l'étape (a') ou (a") est un composé pris dans le groupe formé par la bis-hexaméthylènetriamine de formule $H_2N—(CH_2)_6—NH—(CH_2)_6—NH_2$ et les polyoxyalkylènetriamines répondant à la formule générale :

$$R_1\Big[(OCH_2\underset{X}{\underset{|}{C}H})_n - O\underset{Y}{\underset{|}{C}H} - \underset{Z}{\underset{|}{C}H} - NH_2\Big]_3 \qquad (I)$$

dans laquelle :

. $R_1$ est un radical trivalent qui est le résidu d'un alcool aliphatique trihydroxylé capable d'être polyoxyalkylé, ayant de 3 à 10 atomes de carbone ;

. Z est un radical alkyle linéaire ou ramifié contenant 1 à 18 atomes de carbone ;

. X et Y, identiques ou différents, représentent chacun un atome d'hydrogène ou un radical Z ;

. le symbole n représente un nombre moyen allant de 0 à 50.

5. Procédé selon l'une quelconque des revendications 1 et 3, caractérisé en ce que la triamine à laquelle on fait appel dans l'étape (a') ou (a") est un composé répondant à la formule (I) dans laquelle : $R_1$ a la définition donnée ci-avant dans la revendication 4 ; Z est un radical méthyle ; X représente Z ; Y est un atome d'hydrogène et n a une valeur moyenne allant de 1 à 16.

6. Procédé selon la revendication 5, caractérisé en ce que la triamine est une polyoxypropylènetriamine répondant à la formule

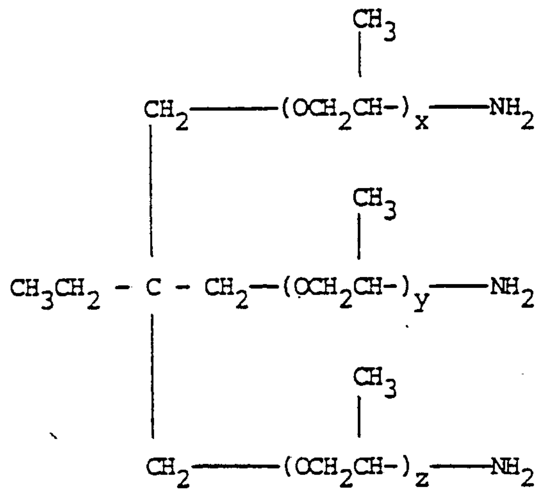

(II)

dans laquelle les symboles x, y et z représentent chacun un nombre moyen allant de 1 à 10, avec la somme x + y + z allant de 3 à 30.

7. Procédé selon l'une quelconque des revendications 1 et 3 à 6, caractérisé en ce que les proportions de triamine engagées, exprimées en nombre de millimole de triamine pour 1 kilogramme de copolyétheramide final, sont comprises généralement entre 0,1 et 20, de préférence, entre 1 et 10.

8. Procédé selon l'une quelconque des revendications 1 et 3 à 7, caractérisé en ce que le catalyseur (alpha) auquel on fait appel consiste dans les espèces suivantes :

. parmi les oxyacides minéraux : les acides sulfureux, sulfurique, hypophosphoreux, phosphoreux, orthophosphorique ou pyrophosphorique ;

. parmi les oxyacides organiques :

. les acides organosulfoniques de formule $R_2—SO_3H$ (III) dans laquelle $R_2$ représente : un radical alkyle linéaire ou ramifié ayant de 1 à 6 atomes de carbone ; un radical phényle éventuellement substitué par 1 à 3 radicaux alkyles ayant de 1 à 3 atomes de carbone ; un radical phénylalkyle comportant de 1 à 3 atomes de carbone dans le reste alkyle et dont le noyau benzénique peut éventuellement être substitué par 1 à 3 radicaux alkyles ayant de 1 à 3 atomes de carbone ; ou un radical naphtyle éventuellement substitué par 1 à 4 radicaux alkyles ayant de 1 à 3 atomes de carbone ;

. les acides organophosphoniques de formule $R_3—P(O)(OH)_2$ (IV) dans laquelle $R_3$ représente un radical alkyle, un radical phényle ou un radical phénylalkyle, chacun de ces radicaux ayant la définition donnée ci-avant pour $R_2$ ;

. les acides organophosphiniques de formule $R_4R_5—P(O)(OH)$ (V) dans laquelle $R_4$ et $R_5$, identiques ou différents, représentent chacun : un radical alkyle linéaire ayant de 1 à 3 atomes de carbone ; un radical phényle ou un radical phénylalkyle, chacun de ces deux derniers radicaux ayant la définition donnée ci-avant pour $R_2$ ;

. les acides organophosphoneux de formule $R_6H—P(O)(OH)$ (VI) dans laquelle $R_6$ représente : un radical alkyle linéaire ou ramifié ayant de 1 à 4 atomes de carbone (la ramification étant exclue pour un radical alkyle à 4 atomes de carbone) ; un radical phényle ou un radical phénylalkyle, chacun de ces deux derniers radicaux ayant la définition donnée ci-avant pour $R_2$.

9. Procédé selon la revendication 8, caractérisé en ce que les acides (alpha) auxquels on fait appel consistent dans les acides dérivés du phosphore appartenant au groupe des acides hypophosphoreux, phosphoreux, orthophosphorique, pyrophosphorique, méthylphosphonique, phénylphosphonique, benzylphosphonique, diméthylphosphinique, diphénylphosphinique, méthylphénylphosphinique, dibenzylphosphinique, méthylphosphoneux, phénylphosphoneux ou benzylphosphoneux.

10. Procédé selon l'une quelconque des revendications 1 à 7, caractérisé en ce que le catalyseur (béta) auquel on fait appel consiste dans les sels de sodium et de potassium issus des acides cités ci-avant dans la revendication 8 et, de préférence, dans les sels de sodium et de potassium issus des acides dérivés du phosphore cités ci-avant dans la revendication 9.

11. Procédé selon l'une quelconque des revendications 8 à 10, caractérisé en ce que les proportions

d'acide fort (alpha) ou de sel (béta), exprimées en pourcentage en poids par rapport au copolyétheramide final, sont comprises généralement entre 0,01 et 1 % et de préférence entre 0,01 et 0,5 %.

12. Procédé selon l'une quelconque des revendications 1 à 11, caractérisé en ce que le lactame auquel on fait appel est l'ε-caprolactame.

13. Procédé selon l'une quelconque des revendications 1 à 12, caractérisé en ce que les acides dimères employés sont obtenus par polymérisation et fractionnement de composés comprenant 80 à 100 % en poids d'acide(s) gras monomère(s) ayant de 16 à 20 atomes de carbone et 20 à 0 % en poids d'acide(s) gras monomère(s) ayant de 8 à 15 atomes de carbone et/ou de 21 à 24 atomes de carbone, lesdits acides dimères comprenant une fraction en acide difonctionnel qui est supérieure à 94 % en poids, une fraction en acide monofonctionnel qui est inférieure à 1 % en poids et une fraction en acide de fonctionnalité supérieure à 2 qui est inférieure à 5 % en poids.

14. Procédé selon la revendication 13, caractérisé en ce que les acides dimères auxquels on fait appel consistent dans les espèces obtenues par fractionnement d'une composition hydrogénée issue de la polymérisation catalytique d'acide(s) gras monomère(s) ayant 18 atomes carbone.

15. Procédé selon l'une quelconque des revendications 1 à 14, caractérisé en ce que les polyoxyalkylènediamines auxquelles on fait appel sont des composés de formule générale :

$$H_2N-R_7-(OR_8)_m-OR_9-NH_2 \qquad (VII)$$

dans laquelle les symboles $R_7$, $R_8$, $R_9$, identiques ou différents, représentent des radicaux aliphatiques saturés divalents, linéaires ou ramifiés, comportant de 1 à 10 atomes de carbone et le symbole m est un nombre déterminé de manière à procurer une masse moléculaire allant de 100 à 10 000 et, de préférence, allant de 300 à 5 000.

16. Procédé selon la revendication 15, caractérisé en ce que les polyoxyalkylènediamines auxquelles on fait appel comprennent des polyoxypropylènediamines de formule (VII) dans laquelle

$$R_7 = R_8 = R_9 = -\overset{\overset{\displaystyle CH_3}{|}}{C}H-CH_2-$$

des polyoxyéthylènediamines de formule (VII) dans laquelle

$$R_7 = R_9 = -\overset{\overset{\displaystyle CH_3}{|}}{C}H-CH_2-$$

et $R_8 = -CH_2-CH_2-$ ou des polyoxytétraméthylènediamines de formule (VII) dans laquelle

$$R_7 = R_9 = -\overset{\overset{\displaystyle CH_3}{|}}{C}H-CH_2-$$

et $R_8 = -CH_2-CH_2-CH_2-CH_2-$, ces composés ayant une masse moléculaire allant de 100 à 10 000 et, de préférence, allant de 300 à 5 000.

17. Procédé selon l'une quelconque des revendications 1 à 16, caractérisé en ce que les proportions pondérales de blocs amides dans le polymère final sont comprises entre 15 et 85 % et, de préférence, entre 40 et 60 % et les proportions pondérales de blocs éthers sont comprises entre 85 et 15 % et, de préférence, entre 60 et 40 %.

## Claims

1. Homogeneous copolyetheramides, with a block structure, having, in particular, a melting or softening point of at least 170 °C, a glass transition temperature measured at ZHE of at most — 5 °C and a melt viscosity of at least 50 Pas, the said copolyetheramides being capable of being obtained in accordance with the operating procedure defined by the following steps :

a') a lactam containing from 4 to 12 carbon atoms is mixed with a solution of a salt of a fatty acid dimer and a suitable amino compound in a solvent medium based on a mixture of water with an aliphatic alcohol containing fewer than 5 carbon atoms, a water/alcohol/lactam mixture (both the alcohol and the lactam employed corresponding to the specifications given above), or lactam itself in a molten state or else, when the lactam is water-soluble, a water/lactam mixture ;

b') the stoichiometry of the said salt having been established beforehand by measuring the pH of the salt solution in a solvent mixture based on water and at least one compound chosen from an aliphatic alcohol, an aliphatic diol or a lactam (both the alcohol and the lactam employed corresponding to the

definitions given above, the aliphatic diol containing from 2 to 6 carbon atoms) and by adjusting the composition of the said salt so that the pH reaches, to within ± 0.05 of a pH unit, the value of the pH at the equivalence point, the mixing of the salt solution with the lactam being capable of being omitted when the solution of the salt in the solvent medium based on a water/alcohol/lactam mixture, of a water/lactam mixture or of lactam itself in the molten state contains sufficient lactam to obtain the copolyetheramide of the required composition ;

c') a catalyst is then added to the reaction mixture ; and

d') the whole is then subjected to heating to cause the lactam to react with the salt ; the said copolyetheramides being characterised in that in step (a') use is made of a salt of a fatty acid dimer and of a mixture of a polyoxyalkylenediamine with a triamine and that in step (c') use is made of a catalyst consisting either of a compound (alpha), or of a compound (beta), (alpha) denoting an inorganic oxyacid or an organic oxyacid other than a carboxylic acid, at least one of the acid groups of which, when there are several of these, has an ionization constant pka in water at 25 °C which is equal to or below 4, (beta) denoting an alkali metal salt or an alkaline-earth metal salt of this acid.

2. Homogeneous copolyetheramides with a block structure, having, in particular a melting or softening point of at least 170 °C, a glass transition temperature measured at ZHE of at most — 5 °C and a melt viscosity of at least 50 Pas, the said copolyetheramides being capable of being obtained in accordance with the operating procedure specified by the following steps :

a') a lactam containing from 4 to 12 carbon atoms is mixed with a solution of a salt of a fatty acid dimer and a suitable amino compound in a solvent medium based on a mixture of water with an aliphatic alcohol containing fewer than 5 carbon atoms, a water/alcohol/lactam mixture (both the alcohol and the lactam employed corresponding to the specifications given above), or lactam itself in a molten state or else, when the lactam is water-soluble, a water/lactam mixture ;

b') the stoichiometry of the said salt having been established beforehand by measuring the pH of the salt solution in a diluent mixture based on water and on at least one compound chosen from an aliphatic alcohol, an aliphatic diol or a lactam (both the alcohol and the lactam employed corresponding to the specifications given above, the aliphatic diol containing from 2 to 6 carbon atoms) and by adjusting the composition of the said salt so that the pH reaches, to within ± 0.05 of a pH unit, the pH value at the equivalence point, the mixing of the solution of the salt with the lactam being capable of being omitted when the solution of the salt in the solvent medium based on a water/alcohol/lactam mixture, a water/lactam mixture or lactam itself in the molten state contains sufficient lactam to obtain the copolyetheramide of the required composition ;

c') a catalyst is then added to the reaction mixture ; and

d') the whole is then subjected to heating to cause the lactam to react with the salt ; the said copolyetheramides being characterised in that in step (a') use is made of a salt of a fatty acid dimer and of a polyoxyalkylenediamine without a triamine and that in step (c') use is made of a catalyst consisting of the compound (beta), such as specified above in Claim 1.

3. Homogeneous copolyetheramides, with a block structure, having, in particular, a melting or softening point of at least 170 °C, a glass transition temperature measured at ZHE of at most — 5 °C and a melt viscosity of at least 50 Pas, the said copolyetheramides being capable of being obtained in accordance with the operating procedure defined by the following steps :

a") a lactam containing from 4 to 12 carbon atoms is mixed with a solution of a salt of a fatty acid dimer and a suitable amino compound in a solvent medium based on a mixture of water with an aliphatic alcohol containing fewer than 5 carbon atoms, a water/alcohol/lactam mixture (both the alcohol and the lactam employed corresponding to the specifications given above), or lactam itself in a molten state or else, when the lactam is water-soluble, a water/lactam mixture ;

b") the stoichiometry of the said solution having been established beforehand by measuring the pH of the solution in a diluent mixture based on water and at least one compound chosen from an aliphatic alcohol, an aliphatic diol or a lactam (both the alcohol and the lactam employed corresponding to the specifications given above, the aliphatic diol containing from 2 to 6 carbon atoms) and by adjusting the composition so that the pH attains, to within ± 0.05 of a pH unit, the pH value at the equivalence point, the mixing of the solution of the salt with the lactam being capable of being omitted when the salt solution in the solvent medium based on a water/alcohol/lactam mixture, a water/lactam mixture or lactam itself in a molten state contains sufficient lactam to obtain the copolyetheramide with the required composition ; and

c") the lactam is then made to react with the salt by heating in the presence of a catalyst ; the said copolyetheramides being characterised in that the catalyst employed is added to the solution of the salt of a fatty acid dimer and of an amino compound before the adjustment of the stoichiometry of the said solution is carried out, the amino compound consisting of a polyoxyalkylenediamine taken alone or mixed with a triamine and the catalyst consisting either of the compound (alpha), or the compound (beta), such as defined above in Claim 1.

4. Copolyetheramides according to either of Claims 1 and 3, characterised in that the triamine of which use is made in step (a') or (a") is a compound taken from the group consisting of bishexamethylenetriamine of formula $H_2N—(CH_2)_6—NH—(CH_2)_6—NH_2$ and the polyoxyalkylenetriamines corresponding to the general formula :

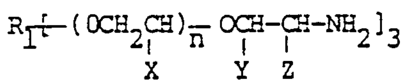 (I)

in which :

. $R_1$ is a trivalent radical which is the residue of a trihydroxylated aliphatic alcohol capable of being polyoxyalkylated, containing from 3 to 10 carbon atoms ;

. Z is a straight-chain or branched alkyl radical containing 1 to 18 carbon atoms ;

. X and Y, which are identical or different, each denote a hydrogen atom or a radical Z ; and

. the symbol n denotes an average number ranging from 0 to 50.

5. Copolyetheramides according to either of Claims 1 and 3, characterised in that the triamine of which use is made in step (a') or (a") is a compound corresponding to the formula (I) in which : $R_1$ has the definition given above in Claim 4 ; Z is a methyl radical ; X denotes Z ; Y is a hydrogen atom and n has an average value ranging from 1 to 16.

6. Copolyetheramides according to Claim 5, characterised in that the triamine is a polyoxypropylenetriamine corresponding to the formula

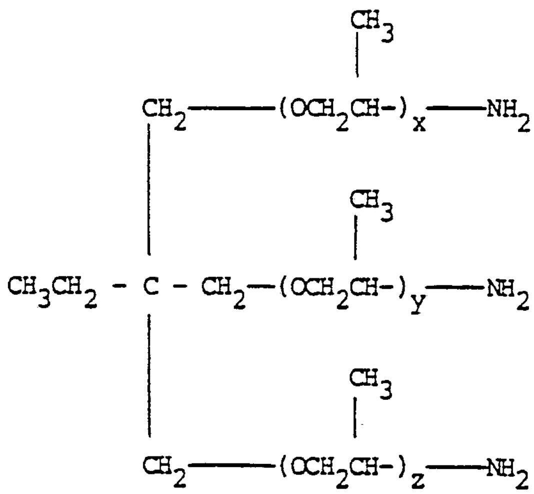 (II)

in which the symbols x, y and z each denote an average number ranging from 1 to 10, with the total of x + y + z ranging from 3 to 30.

7. Copolyetheramides according to any one of Claims 1 and 3 to 6, characterised in that the proportions of triamine which are employed, expressed as the number of millimoles of triamine per 1 kilogramme of final copolyetheramide are generally between 0.1 and 20, preferably between 1 and 10.

8. Copolyetheramides according to any one of Claims 1 and 3 to 7, characterised in that the catalyst (alpha) of which use is made consists of the following species :

. among the inorganic oxyacids : sulphurous, sulphuric, hypophosphorous, phosphorous, orthophosphoric or pyrophosphoric acids ;

. among the organic oxyacids :

. the organosulphonic acids of formula $R_2—SO_3H$ (III) in which $R_2$ denotes : a straight-chain or branched alkyl radical containing from 1 to 6 carbon atoms, a phenyl radical optionally substituted by 1 to 3 alkyl radicals containing from 1 to 3 carbon atoms, a phenylalkyl radical containing from 1 to 3 carbon atoms in the alkyl residue and in which the benzene nucleus may optionally be substituted by 1 to 3 alkyl radicals containing from 1 to 3 carbon atoms, or a naphthyl radical optionally substituted by 1 to 4 alkyl radicals containing from 1 to 3 carbon atoms ;

. the organophosphonic acids of formula $R_3—P(O)(OH)_2$ (IV) in which $R_3$ denotes an alkyl radical, a phenyl radical or a phenylalkyl radical, each of these radicals having the definition given above for $R_2$ ;

. the organophosphinic acids of formula $R_4R_5—P(O)(OH)$ (V) in which $R_4$ and $R_5$, which are identical or different, each denote : a straight-chain alkyl radical containing from 1 to 3 carbon atoms, a phenyl radical or a phenylalkyl radical, each of these latter two radicals having the definition given above for $R_2$ ;

. the organophosphonous acids of formula $R_6H—P(O)(OH)$ (VI) in which $R_6$ denotes : a straight-chain or branched alkyl radical containing from 1 to 4 carbon atoms (branching being excluded in the case of an alkyl radical containing 4 carbon atoms), a phenyl radical or a phenylalkyl radical, each of these two latter radicals having the definition given above for $R_2$.

9. Copolyetheramides according to Claim 8, characterised in that the acids (alpha) of which use is made consist of the acids derived from phosphorus belonging to the group of hypophosphorous,

phosphorous, orthophosphoric, pyrophosphoric, methylphosphonic, phenylphosphonic, benzylphosphonic, dimethylphosphinic, diphenylphosphinic, methylphenylphosphinic, dibenzylphosphinic, methylphosphonous, phenylphosphonous or benzylphosphonous acids.

10. Copolyetheramides according to any one of Claims 1 to 7, characterised in that the catalyst (beta) of which use is made consists of the sodium and potassium salts derived from the acids mentioned above in Claim 8 and, preferably, of the sodium and potassium salts originating from the phosphorus-derived acids mentioned above in Claim 9.

11. Copolyetheramides according to any one of Claims 8 to 10, characterised in that the proportions of strong acid (alpha) or salt (beta), expressed as a percentage by weight relative to the final copolyetheramide, are generally between 0.01 and 1 % and preferably between 0.01 and 0.5 %.

12. Copolyetheramides according to any one of Claims 1 to 11, characterised in that the lactam of which use is made is ε-caprolactam.

13. Copolyetheramides according to any one of Claims 1 to 12, characterised in that the dimer acids employed are obtained by polymerization and fractionation of compounds containing 80 to 100 % by weight of monomeric fatty acid(s) containing from 16 to 20 carbon atoms and 20 to 0 % by weight of monomeric fatty acid(s) containing from 8 to 15 carbon atoms and/or from 21 to 24 carbon atoms, the said dimer acids comprising a difunctional acid fraction which is greater than 94 % by weight, a monofunctional acid fraction which is smaller than 1 % by weight and a fraction of acid of functionality greater than 2 which is below 5 % by weight.

14. Copolyetheramides according to Claim 13, characterised in that the dimer acids of which use is made consist of the species obtained by fractionation of a hydrogenated composition originating from the catalytic polymerization of monomeric fatty acid(s) containing 18 carbon atoms.

15. Copolyetheramides according to any one of Claims 1 to 14, characterised in that the polyoxyalkylenediamines of which use is made are compounds of general formula

$$H_2N—R_7—(OR_8)_m—OR_9—NH_2 \qquad (VII)$$

in which the symbols $R_7$, $R_8$, $R_9$, which are identical or different, denote straight-chain or branched divalent saturated aliphatic radicals containing from 1 to 10 carbon atoms, and the symbol m is a number determined so as to provide a molecular mass ranging from 100 to 10,000 and, preferably, ranging from 300 to 5,000.

16. Copolyetheramides according to Claim 15, characterised in that the polyoxyalkylenediamines of which use is made comprise polyoxypropylenediamines of formula (VII) in which

$$R_7 = R_8 = R_9 = -\underset{\displaystyle\vert}{\overset{CH_3}{}}\!\!\!\!\!CH - CH_2 -$$

polyoxyethylenediamines of formula (VII) in which

$$R_7 = R_9 = -\overset{CH_3}{\overset{|}{CH}} - CH_2 -$$

and $R_8$ = —$CH_2$—$CH_2$—, or polyoxytetramethylenediamines of formula (VII) in which

$$R_7 = R_9 = -\overset{CH_3}{\overset{|}{CH}} - CH_2 -$$

and $R_8$ = —$CH_2$—$CH_2$—$CH_2$—$CH_2$—, these compounds having a molecular mass ranging from 100 to 10,000 and, preferably, ranging from 300 to 5,000.

17. Copolyetheramides according to any one of Claims 1 to 16, characterised in that the weight proportions of amide blocks in the final polymer are between 15 and 85 % and, preferably, between 40 and 60 %, and the weight proportions of ether blocks are between 85 and 15 % and preferably, between 60 and 40 %.

**Claims** (for the Contracting State AT)

1. Process for preparing homogeneous copolyetheramides, with a block structure, having, in particular, a melting or softening point of at least 170 °C, a glass transition temperature measured at ZHE of at most — 5 °C and a melt viscosity of at least 50 Pas, the said process being carried out in accordance with the operating procedure defined by the following steps :

a') a lactam containing from 4 to 12 carbon atoms is mixed with a solution of a salt of a fatty acid

dimer and a suitable amino compound in a solvent medium based on a mixture of water with an aliphatic alcohol containing fewer than 5 carbon atoms, a water/alcohol/lactam mixture (both the alcohol and the lactam employed corresponding to the specifications given above), or lactam itself in a molten state or else, when the lactam is water-soluble, a water/lactam mixture ;

b') the stoichiometry of the said salt having been established beforehand by measuring the pH of the salt solution in a solvent mixture based on water and at least one compound chosen from an aliphatic alcohol, an aliphatic diol or a lactam (both the alcohol and the lactam employed corresponding to the definitions given above, the aliphatic diol containing from 2 to 6 carbon atoms) and by adjusting the composition of the said salt so that the pH reaches, to within ± 0.05 of a pH unit, the value of the pH at the equivalence point, the mixing of the salt solution with the lactam being capable of being omitted when the solution of the salt in the solvent medium based on a water/alcohol/lactam mixture, of a water/lactam mixture or of lactam itself in the molten state contains sufficient lactam to obtain the copolyetheramide of the required composition ;

c') a catalyst is then added to the reaction mixture ; and

d') the whole is then subjected to heating to cause the lactam to react with the salt ; the said process being characterised in that in step (a') use is made of a salt of a fatty acid dimer and of a mixture of a polyoxyalkylenediamine with a triamine and that in step (c') use is made of a catalyst consisting either of a compound (alpha), or of a compound (beta), (alpha) denoting an inorganic oxyacid or an organic oxyacid other than a carboxylic acid, at least one of the acid groups of which, when there are several of these, has an ionization constant pKa in water at 25 °C which is equal to or below 4, (beta) denoting an alkali metal salt or an alkaline-earth metal salt of this acid.

2. Process for preparing homogeneous copolyetheramides with a block structure, having, in particular a melting or solfening point of at least 170 °C, a glass transition temperature measured at ZHE of at most — 5 °C and a melt viscosity of at least 50 Pas, the said process being carried cut in accordance with the operating procedure specified by the following steps :

a') a lactam containing from 4 to 12 carbon atoms is mixed with a solution of a salt of a fatty acid dimer and a suitable amino compound in a solvent medium based on a mixture of water with an aliphatic alcohol containing fewer than 5 carbon atoms, a water/alcohol/lactam mixture (both the alcohol and the lactam employed corresponding to the specifications given above), or lactam itself in a molten state or else, when the lactam is water-soluble, a water/lactam mixture ;

b') the stoichiometry of the said salt having been established beforehand by measuring the pH of the salt solution in a diluent mixture based on water and on at least one compound chosen from an aliphatic alcohol, an aliphatic diol or a lactam (both the alcohol and the lactam employed corresponding to the specifications given above, the aliphatic diol containing from 2 to 6 carbon atoms) and by adjusting the composition of the said salt so that the pH reaches, to within ± 0.05 of a pH unit, the pH value at the equivalence point, the mixing of the solution of the salt with the lactam being capable of being omitted when the solution of the salt in the solvent medium based on a water/alcohol/lactam mixture, a water/lactam mixture or lactam itself in the molten state contains sufficient lactam to obtain the copolyetheramide of the required composition ;

c') a catalyst is then added to the reaction mixture ; and

d') the whole is then subjected to heating to cause the lactam to react with the salt ; the said process being characterised in that in step (a') use is made of a salt of a fatty acid dimer and of a polyoxyalkylenediamine without a triamine and that in step (c') use is made of a catalyst consisting of the compound (beta), such as specified above in Claim 1.

3. Process for preparing homogeneous copolyetheramides, with a block structure, having, in particular, a melting or softening point of at least 170 °C, a glass transition temperature measured at ZHE of at most — 5 °C and a melt viscosity of at least 50 Pas, the said process being carried out in accordance with the operating procedure defined by the following steps :

a'') a lactam containing from 4 to 12 carbon atoms is mixed with a solution of a salt of a fatty acid dimer and a suitable amino compound in a solvent medium based on a mixture of water with an aliphatic alcohol containing fewer than 5 carbon atoms, a water/alcohol/lactam mixture (both the alcohol and the lactam employed corresponding to the specifications given above), or lactam itself in a molten state or else, when the lactam is water-soluble, a water/lactam mixture ;

b'') the stoichiometry of the said solution having been established beforehand by measuring the pH of the solution in a diluent mixture based on water and at least one compound chosen from an aliphatic alcohol, an aliphatic diol or a lactam (both the alcohol and the lactam employed corresponding to the specifications given above, the aliphatic diol containing from 2 to 6 carbon atoms) and by adjusting the composition so that the pH attains, to within ± 0.05 of a pH unit, the pH value at the equivalence point, the mixing of the solution of the salt with the lactam being capable of being omitted when the salt solution in the solvent medium based on a water/alcohol/lactam mixture, a water/lactam mixture or lactam itself in a molten state contains sufficient lactam to obtain the copolyetheramide with the required composition ; and

c'') the lactam is then made to react with the salt by heating in the presence of a catalyst ; the said process being characterised in that the catalyst employed is added to the solution of the salt of a fatty acid dimer and of an amino compound before the adjustment of the stoichiometry of the said solution is

carried out, the amino compound consisting of a polyoxyalkylenediamine taken alone or mixed with a triamine and the catalyst consisting either of the compound (alpha), or the compound (beta), such as defined above in Claim 1.

4. Process according to either of Claims 1 and 3, characterised in that the triamine of which use is made in step (a') or (a'') is a compound taken from the group consisting of bishexamethylenetriamine of formula $H_2N—(CH_2)_6—NH—(CH_2)_6—NH_2$ and the polyoxyalkylenetriamines corresponding to the general formula :

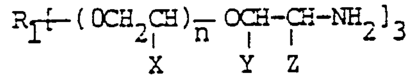
(I)

in which :

— $R_1$ is a trivalent radical which is the residue of a trihydroxylated aliphatic alcohol capable of being polyoxyalkylated, containing from 3 to 10 carbon atoms ;

— Z is a straight-chain or branched alkyl radical containing 1 to 18 carbon atoms ;

— X and Y, which are identical or different, each denote a hydrogen atom or a radical Z ; and

— the symbol n denotes an average number ranging from 0 to 50.

5. Process according to either of Claims 1 and 3, characterised in that the triamine of which use is made in step (a') or (a'') is a compound corresponding to the formula (I) in which : $R_1$ has the definition given above in Claim 4 ; Z is a methyl radical ; X denotes Z ; Y is a hydrogen atom and n has an average value ranging from 1 to 16.

6. Process according to Claim 5, characterised in that the triamine is a polyoxypropylenetriamine corresponding to the formula

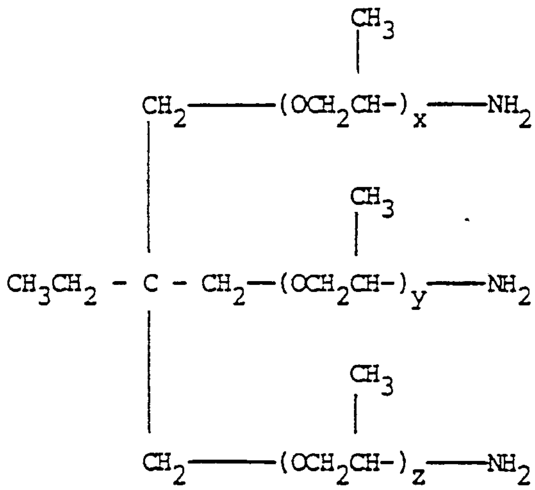
(II)

in which the symbols x, y and z each denote an average number ranging from 1 to 10, with the total of x + y + z ranging from 3 to 30.

7. Process according to any one of Claims 1 and 3 to 6, characterised in that the proportions of triamine which are employed, expressed as the number of millimoles of triamine per 1 kilogramme of final copolyetheramide are generally between 0.1 and 20, preferably between 1 and 10.

8. Process according to any one of Claims 1 and 3 to 7, characterised in that the catalyst (alpha) of which use is made consists of the following species :

— among the inorganic oxyacids : sulphurous, sulphuric, hypophosphorous, phosphorous, orthophosphoric or pyrophosphoric acids ;

— among the organic oxyacids :

— the organosulphonic acids of formula $R_2—SO_3H$ (III) in which $R_2$ denotes : a straight-chain or branched alkyl radical containing from 1 to 6 carbon atoms, a phenyl radical optionally substituted by 1 to 3 alkyl radicals containing from 1 to 3 carbon atoms, a phenylalkyl radical containing from 1 to 3 carbon atoms in the alkyl residue and in which the benzene nucleus may optionally be substituted by 1 to 3 alkyl radicals containing from 1 to 3 carbon atoms, or a naphthyl radical optionally substituted by 1 to 4 alkyl radicals containing from 1 to 3 carbon atoms ;

— the organophosphonic acids of formula $R_3—P(O)(OH)_2$ (IV) in which $R_3$ denotes an alkyl radical, a phenyl radical or a phenylalkyl radical, each of these radicals having the definition given above for $R_2$ ;

— the organophosphinic acids of formula $R_4R_5—P(O)(OH)$ (V) in which $R_4$ and $R_5$, which are identical or different, each denote : a straight-chain alkyl radical containing from 1 to 3 carbon atoms, a phenyl radical or a phenylalkyl radical, each of these latter two radicals having the definition given above for $R_2$ ;

— the organophosphonous acids of formula $R_6H—P(O)(OH)$ (VI) in which $R_6$ denotes: a straight-chain or branched alkyl radical containing from 1 to 4 carbon atoms (branching being excluded in the case of an alkyl radical containing 4 carbon atoms), a phenyl radical or a phenylalkyl radical, each of these two latter radicals having the definition given above for $R_2$.

9. Process according to Claim 8, characterised in that the acids (alpha) of which use is made consist of the acids derived from phosphorus belonging to the group of hypophosphorous, phosphorous, orthophosphoric, pyrophosphoric, methylphosphonic, phenylphosphonic, benzylphosphonic, dimethylphosphinic, diphenylphosphinic, methylphenylphosphinic, dibenzylphosphinic, methylphosphonous, phenylphosphonous or benzylphosphonous acids.

10. Process according to any one of Claims 1 to 7, characterised in that the catalyst (beta) of which use is made consists of the sodium and potassium salts derived from the acids mentioned above in Claim 8 and, preferably, of the sodium and potassium salts originating from the phosphorus-derived acids mentioned above in Claim 9.

11. Process according to any one of Claims 8 to 10, characterised in that the proportions of strong acid (alpha) or salt (beta), expressed as a percentage by weight relative to the final copolyetheramide, are generally between 0.01 and 1 % and preferably between 0.01 and 0.5 %.

12. Process according to any one of Claims 1 to 11, characterised in that the lactam of which use is made is ε-caprolactam.

13. Process according to any one of Claims 1 to 12, characterised in that the dimer acids employed are obtained by polymerization and fractionation of compounds containing 80 to 100 % by weight of monomeric fatty acid(s) containing from 16 to 20 carbon atoms and 20 to 0 % by weight of monomeric fatty acid(s) containing from 8 to 15 carbon atoms and/or from 21 to 24 carbon atoms, the said dimer acids comprising a difunctional acid fraction which is greater than 94 % by weight, a monofunctional acid fraction which is smaller than 1 % by weight and a fraction of acid of functionality greater than 2 which is below 5 % by weight.

14. Process according to Claim 13, characterised in that the dimer acids of which use is made consist of the species obtained by fractionation of a hydrogenated composition originating from the catalytic polymerization of monomeric fatty acid(s) containing 18 carbon atoms.

15. Process according to any one of Claims 1 to 14, characterised in that the polyoxyalkylenediamines of which use is made are compounds of general formula

$$H_2N—R_7—(OR_8)_m—OR_9—NH_2 \qquad \text{(VII)}$$

in which the symbols $R_7$, $R_8$, $R_9$, which are identical or different, denote straight-chain or branched divalent saturated aliphatic radicals containing from 1 to 10 carbon atoms, and the symbol m is a number determined so as to provide a molecular mass ranging from 100 to 10,000 and, preferably, ranging from 300 to 5,000.

16. Process according to Claim 15, characterised in that the polyoxyalkylenediamines of which use is made comprise polyoxypropylenediamines of formula (VII) in which

$$R_7 = R_8 = R_9 = -\underset{\underset{CH_3}{|}}{CH}-CH_2-$$

polyoxyethylenediamines of formula (VII) in which

$$R_7 = R_9 = -\underset{\underset{CH_3}{|}}{CH}-CH_2-$$

and $R_8 = —CH_2—CH_2—$ or polyoxytetramethylenediamines of formula (VII) in which

$$R_7 = R_9 = -\underset{\underset{CH_3}{|}}{CH}-CH_2-$$

and $R_8 = —CH_2—CH_2—CH_2—CH_2—$, these compounds having a molecular mass ranging from 100 to 10,000 and, preferably, ranging from 300 to 5,000.

17. Process according to any one of Claims 1 to 16, characterised in that the weight proportions of amide blocks in the final polymer are between 15 and 85 % and, preferably, between 40 and 60 %, and the weight proportions of ether blocks are between 85 and 15 % and, preferably, between 60 and 40 %.

**Patentansprüche**

1. Homogene Copolyetheramide mit Blockstruktur, die insbesondere einen Schmelzpunkt oder Erweichungspunkt von mindestens gleich 170 °C, eine Glasübergangstemperatur, gemessen bei EHO,

höchstens gleich — 5 °C, und eine Schmelzviskosität mindestens gleich 50 Pas aufweisen, wobei diese Copolyetheramide in der Lage sind, gemäß der durch die folgenden Stufen definierten Arbeitsweise erhalten zu werden :

(a') man vermischt ein Lactam mit 4 bis 12 Kohlenstoffatomen mit einer Lösung eines Salzes eines Fettsäuredimeren und einer geeigneten Aminverbindung in einem Lösungsmilieu auf Basis einer Mischung Wasser-aliphatischer Alkohol mit weniger als 5 Kohlenstoffatomen, eines Gemisches Wasser-Alkohol-Lactam (der verwendete Alkohol und das Lactam entsprechen der einen oder anderen der vorstehend angegebenen Definitionen), des Lactams selbst in geschmolzenem Zustand oder auch, wenn das Lactam in Wasser löslich ist, eines Gemisches Wasser-Lactam ;

(b') die Stöchiometrie dieses Salzes wird vorher festgesetzt, indem das pH der Lösung des Salzes in einem Verdünnungsgemisch auf Basis von Wasser und mindestens einer Verbindung, ausgewählt aus einem aliphatischen Alkohol, einem aliphatischen Diol oder einem Lactam (der verwendete Alkohol und das verwendete Lactam entsprechen der einen oder anderen der vorstehend angegebenen Definitionen, das aliphatische Diol hat 2 bis 6 Kohlenstoffatome), gemessen wird und indem die Zusammensetzung dieses Salzes derart eingestellt wird, daß das pH bei ± 0,05 pH-Einheit den pH-Wert im Äquivalenzpunkt erreicht, wobei das Gemisch der Lösung des Salzes mit dem Lactam weggelassen werden kann, wenn die Lösung des Salzes in dem Auflösungsmilieu auf Basis eines Gemisches Wasser-Alkohol-Lactam, eines Gemisches Wasser-Lactam oder Lactam selbst in geschmolzenem Zustand genügend Lactam enthält, um das Copolyetheramid mit der gewünschten Zusammensetzung zu erhalten ;

(c') dann gibt man in das Reaktionsgemisch einen Katalysator ;

(d') und man unterwirft dann das Ganze einem Erhitzen, um das Lactam mit dem Salz reagieren zu lassen ; wobei diese Copolyetheramide dadurch gekennzeichnet sind, daß man in der Stufe (a') ein Salz des Fettsäuredimeren und eines Gemisches Polyoxyalkylendiamin mit einem Triamin einsetzt und daß man in der Stufe (c') einen Katalysator verwendet, der entweder aus einer Verbindung (alpha) oder einer Verbindung (beta) besteht, wobei (alpha) eine Mineraloxysäure oder eine organische Oxysäure, anders als eine Carbonsäure, bezeichnet, wovon wenigstens eine der Säurefunktionen, wenn es davon mehrere gibt, eine Ionisationskonstante pka in Wasser bei 25 °C gleich oder unterhalb von 4 besitzt, (beta) ein Alkali- oder Erdalkalisalz dieser Säure bezeichnet.

2. Homogene Copolyetheramide mit Blockstruktur, die insbesondere einen Schmelz- oder Erweichungspunkt mindestens gleich 170 °C, eine Glasübergangstemperatur, gemessen bei EHO, höchstens gleich — 5 °C und eine Schmelzviskosität mindestens gleich 50 Pas aufweisen, wobei diese Copolyetheramide in der Lage sind, entsprechend der in den folgenden Stufen definierten Arbeitsweise erhalten zu werden :

(a') man vermischt ein Lactam mit 4 bis 12 Kohlenstoffatomen mit einer Lösung eines Salzes von dimerer Fettsäure und einer geeigneten Aminverbindung in einem Auflösungsmilieu auf Basis eines Gemisches Wasser-aliphatischer Alkohol mit weniger als 5 Kohlenstoffatomen, eines Gemisches Wasser-Alkohol-Lactam (der verwendete Alkohol und das verwendete Lactam entsprechen der einen oder anderen der vorstehend gegebenen Definitionen), von Lactam selbst in geschmolzenem Zustand oder auch, wenn das Lactam in Wasser löslich ist, eines Gemisches Wasser-Lactam ;

(b') die Stöchiometrie dieses Salzes wird vorher festgestellt, indem das pH der Lösung des Salzes in einem Verdünnungsgemisch auf Basis von Wasser und mindestens einer Verbindung, ausgewählt unter einem aliphatischen Alkohol, einem aliphatischen Diol oder einem Lactam (der verwendete Alkohol und das verwendete Lactam entsprechen der einen oder anderen der vorstehend gegebenen Definitionen, das aliphatische Diol umfaßt 2 bis 6 Kohlenstoffatome), gemessen wird und indem die Zusammensetzung dieses Salzes in der Weise eingestellt wird, daß das pH bei ± 0,05 pH-Einheiten den pH-Wert am Äquivalenzpunkt erreicht und das Gemisch der Lösung des Salzes mit dem Lactam weggelassen werden kann, wenn die Lösung des Salzes in dem Auflösungsmilieu auf Basis eines Gemisches Wasser-Alkohol-Lactam, eines Gemisches Wasser-Lactam oder Lactam selbst in geschmolzenem Zustand genügend Lactam enthält, um das Copolyetheramid der gewünschten Zusammensetzung zu erhalten ;

(c') dann gibt man in das Reaktionsgemisch einen Katalysator ;

(d') man unterwirft dann das Ganze einem Erhitzen, um das Lactam mit dem Salz reagieren zu lassen ; die genannten Copolyetheramide sind dadurch gekennzeichnet, daß man in der Stufe (a') ein Salz von dimerer Fettsäure und Polyoxyalkylendiamin ohne Triamin einsetzt und daß man in der Stufe (c') einen Katalysator verwendet, der aus der Verbindung (beta) besteht, wie sie vorstehend in Anspruch 1 definiert ist.

3. Homogene Copolyetheramide mit Blockstruktur, die insbesondere einen Schmelz- oder Erweichungspunkt von mindestens gleich 170 °C, eine Glasübergangstemperatur, gemessen bei EHO, höchstens gleich — 5 °C und eine Schmelzviskosität mindestens gleich 50 Pas aufweisen, wobei diese Copolyetheramide in der Lage sind, entsprechend der durch die folgenden Stufen definierten Arbeitsweise erhalten zu werden :

(a'') man vermischt ein Lactam mit 4 bis 12 Kohlenstoffatomen mit einer Lösung eines Salzes von dimerer Fettsäure und einer geeigneten Aminverbindung in einem Auflösungsmilieu auf Basis eines Gemisches von Wasser-aliphatischem Alkohol mit weniger als 5 Kohlenstoffatomen, eines Gemisches Wasser-Alkohol-Lactam (der verwendete Alkohol und das verwendete Lactam entsprechen der einen und

anderen der vorstehend gegebenen Definitionen), von Lactam selbst in geschmolzenem Zustand oder auch, wenn das Lactam in Wasser löslich ist, eines Gemisches Wasser-Lactam ;

(b'') die Stöchiometrie dieser Lösung wird vorher festgesetzt, indem das pH der Lösung in einem Verdünnungsgemisch auf Basis von Wasser und mindestens einer Verbindung, ausgewählt unter einem aliphatischen Alkohol, einem aliphatischen Diol oder einem Lactam (der Alkohol oder das Lactam entsprechen der einen und anderen in den vorstehend gegebenen Definitionen, das aliphatische Diol umfaßt 2 bis 6 Kohlenstoffatome), gemessen wird und indem die Zusammensetzung derart eingestellt wird, daß das pH bei ± 0,05 pH-Einheiten den pH-Wert am Äquivalenzpunkt erreicht, wobei das Gemisch der Lösung des Salzes mit dem Lactam weggelassen werden kann, wenn die Lösung des Salzes in dem Auflösungsmilieu auf Basis eines Gemisches Wasser-Alkohol-Lactam, eines Gemisches Wasser-Lactam oder Lactam selbst in geschmolzenem Zustand hinreichend Lactam enthält, um das Copolyetheramid der gewünschten Zusammensetzung zu erhalten ;

(c'') dann läßt man durch Erhitzen das Lactam mit dem Salz in Gegenwart eines Katalysators reagieren, wobei diese Copolyetheramide dadurch gekennzeichnet sind, daß der verwendete Katalysator in die Lösung des Salzes von dimerer Fettsäure und Aminverbindung zugegeben wird, bevor die Stöchiometrie der Lösung reguliert wird, und die Aminverbindung aus einem Polyoxyalkylendiamin allein oder im Gemisch mit einem Triamin besteht und der Katalysator entweder aus der Verbindung (alpha) oder aus der Verbindung (beta), wie vorstehend in Anspruch 1 definiert, besteht.

4. Copolyetheramide gemäß einem der Ansprüche 1 und 3, dadurch gekennzeichnet, daß das Triamin, das man in der Stufe (a') oder (a'') verwendet, eine Verbindung ist, ausgewählt aus der Gruppe, die durch Bis-hexamethylentriamin der Formel $H_2N—(CH_2)_6—NH—(CH_2)_6—NH_2$ und den Polyoxyalkylentriaminen der allgemeinen Formel (I) gebildet ist :

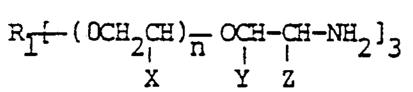
(I)

worin

$R_1$ ein dreiwertiger Rest ist, welcher der Rest eines trihydroxylierten, aliphatischen Alkohols ist, der polyoxyalkyliert werden kann und 3 bis 10 Kohlenstoffatome hat ;

Z ist ein linearer oder verzweigter Alkylrest mit 1 bis 18 Kohlenstoffatomen ;

X und Y, die identisch oder verschieden sind, bedeuten jeweils ein Wasserstoffatom oder einen Rest Z ;

das Symbol n bedeutet eine mittlere Zahl von 0 bis 50.

5. Copolyetheramide gemäß einem der Ansprüche 1 und 3, dadurch gekennzeichnet, daß das Triamin, das in der Stufe (a') oder (a'') verwendet wird, eine Verbindung der Formel (I) ist, worin $R_1$ die vorstehend in Anspruch 4 gegebene Definition hat ; Z ein Methylrest ist ; X für Z steht ; Y ein Wasserstoffatom ist und n den mittleren Wert von 1 bis 16 hat.

6. Copolyetheramide gemäß Anspruch 5, dadurch gekennzeichnet, daß das Triamin ein Polyoxypropylentriamin der Formel (II) ist :

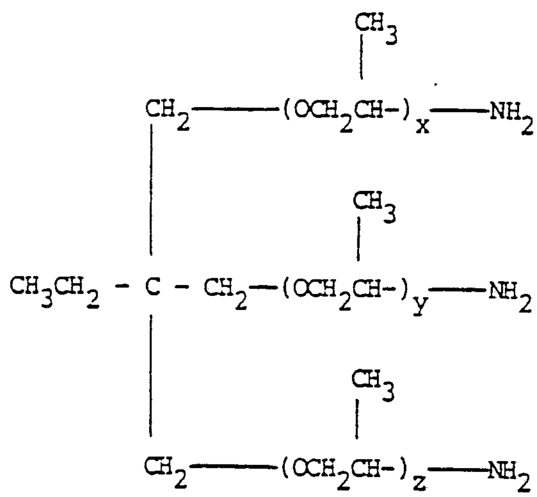
(II)

worin die Symbole x, y und z jeweils eine mittlere Zahl von 1 bis 10 bedeuten mit der Summe x + y + z von 3 bis 30.

7. Copolyetheramide gemäß einem der Ansprüche 1 und 3 bis 6, dadurch gekennzeichnet, daß die eingesetzten Mengen an Triamin, ausgedrückt als Millimol Triamin pro 1 kg End-Copolyetheramid, im allgemeinen zwischen 0,1 und 20, vorzugsweise zwischen 1 und 10, liegen.

8. Copolyetheramide gemäß einem der Ansprüche 1 und 3 bis 7, dadurch gekennzeichnet, daß der Katalysator (alpha), der verwendet wird, aus den folgenden Gruppen besteht :

unter den mineralischen Oxysäuren: Schwefligesäure, Schwefelsäure, Hypophosphorigesäure, Phosphorigesäure, Orthophosphorsäure oder Pyrophosphorsäure ;

unter den organischen Oxysäuren :

die Organosulfonsäuren der Formel $R_2$—$SO_3H$ (III), worin $R_2$ bedeutet: einen linearen oder verzweigten Alkylrest mit 1 bis 6 Kohlenstoffatomen ; einen Phenylrest, gegebenenfalls substituiert durch 1 bis 3 Alkylreste mit 1 bis 3 Kohlenstoffatomen ; einen Phenylalkylrest mit 1 bis 3 Kohlenstoffatomen im Alkylrest und dessen Benzolring gegebenenfalls substituiert sein kann durch 1 bis 3 Alkylreste mit 1 bis 3 Kohlenstoffatomen ; oder einen Naphthylrest, gegebenenfalls substituiert durch 1 bis 4 Alkylreste mit 1 bis 3 Kohlenstoffatomen ;

die Organophosphonsäuren der Formel $R_3$—P(O) $(OH)_2$(IV) worin $R_3$ einen Alkylrest, einen Phenylrest oder einen Phenylalkylrest bedeutet, wobei jeder dieser Reste die vorstehend für $R_2$ angegebene Definition hat ;

die Organophosphinsäuren der Formel $R_4R_5$—P(O) (OH) (V) worin $R_4$ und $R_5$ identisch oder verschieden sind und jeweils bedeuten: einen geraden Alkylrest mit 1 bis 3 Kohlenstoffatomen ; einen Phenylrest oder einen Phenylalkylrest, wobei jeder dieser zwei letztgenannten Reste die vorstehend für $R_2$ gegebene Definition hat ;

die Organophosphonigensäuren der Formel $R_6H$—P(O) (OH) (VI), worin $R_6$ bedeutet: einen linearen oder verzweigten Alkylrest mit 1 bis 4 Kohlenstoffatomen (die Verzweigung ist für einen Alkylrest mit 4 Kohlenstoffatomen ausgeschlossen) ; einen Phenylrest oder einen Phenylalkylrest, wobei jeder dieser beiden letztgenannten Reste die vorstehend für $R_2$ gegebene Definition hat.

9. Copolyetheramide gemäß Anspruch 8, dadurch gekennzeichnet, daß die (alpha) Säuren, welche verwendet werden, bestehen aus Säuren, abgeleitet von Phosphor, gehörend zu der Gruppe der Hypophosphorigen-, Phosphorigen-, Orthophosphor-, Pyrophosphor-, Methylphosphon-, Phenylphosphon-, Benzylphosphon-, Dimethylphosphin-, Diphenylphosphin-, Methylphenylphosphin-, Dibenzylphosphin-, Methylphosphonige-, Phenylphosphonige- oder Benzylphosphonigesäuren.

10. Copolyetheramide gemäß einem der Ansprüche 1 bis 7, dadurch gekennzeichnet, daß der Katalysator (beta), der verwendet wird, aus Natrium- und Kaliumsalzen von den vorstehend in Anspruch 8 zitierten Säuren besteht und vorzugsweise aus Natrium- und Kaliumsalzen von Säuren, die von Phosphor abgeleitet sind, wie sie vorstehend in Anspruch 9 genannt sind.

11. Copolyetheramide gemäß einem der Ansprüche 8 bis 10, dadurch gekennzeichnet, daß die Mengenverhältnisse von starker Säure (alpha) oder Salz (beta), ausgedrückt in Gewichtsprozenten in bezug auf das End-Copolyetheramid, im allgemeinen zwischen 0,01 und 1 % und vorzugsweise zwischen 0,01 und 0,5 % liegen.

12. Copolyetheramide gemäß einem der Ansprüche 1 bis 11, dadurch gekennzeichnet, daß das verwendete Lactam ε-Caprolactam ist.

13. Copolyetheramide gemäß einem der Ansprüche 1 bis 12, dadurch gekennzeichnet, daß die verwendeten dimeren Säuren erhalten sind durch Polymerisation und Fraktionierung von Verbindungen, enthaltend 80 bis 100 Gew.% monomere Fettsäure(n) mit 16 bis 20 Kohlenstoffatomen und 20 bis 0 Gew.% monomere Fettsäure(n) mit 8 bis 15 Kohlenstoffatomen und/oder 21 bis 24 Kohlenstoffatomen, wobei diese dimeren Säuren eine Fraktion an difunktioneller Säure enthalten, die größer als 94 Gew.% ist, eine Fraktion an monofunktioneller Säure, die unterhalb 1 Gew.% ist, und eine Fraktion an Säure mit Funktionalität über 2, welche unterhalb 5 Gew.% liegt.

14. Copolyetheramide gemäß Anspruch 13, dadurch gekennzeichnet, daß die verwendeten dimeren Säuren aus Arten bestehen, die durch Fraktionierung einer hydrierten Zusammensetzung von der katalytischen Polymerisation von monomerer(n) Fettsäure(n) mit 18 Kohlenstoffatomen erhalten wurden.

15. Copolyetheramide gemäß einem der Ansprüche 1 bis 14, dadurch gekennzeichnet, daß die verwendeten Polyoxyalkylendiamine Verbindungen der allgemeinen Formel

$$H_2N—R_7—(OR_8)_m—OR_9—NH_2 \qquad (VII)$$

sind, worin die Symbole $R_7$, $R_8$ und $R_9$, die identisch oder verschieden sind, zweiwertige, gesättigte, aliphatische Reste, gerade oder verzweigt, mit 1 bis 10 Kohlenstoffatomen sind und das Symbol m ist eine Zahl, die derart bestimmt ist, daß eine Molekularmasse von 100 bis 10 000 und vorzugsweise von 300 bis 5000 erhalten wird.

16. Copolyetheramide gemäß Anspruch 15, dadurch gekennzeichnet, daß die verwendeten Polyoxyalkylendiamine Polyoxypropylendiamine der Formel (VII) sind, worin

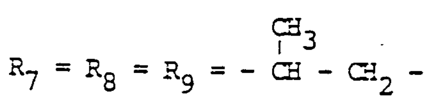

Polyoxyethylendiamine der Formel (VII), worin

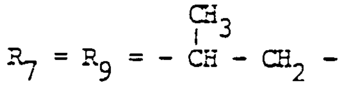

und $R_8$ = $—CH_2—CH_2—$, oder Polyoxytetramethylendiamine der Formel (VII), worin

$$R_7 = R_9 = -\underset{|}{\overset{CH_3}{}}CH-CH_2-$$

und $R_8$ = $—CH_2—CH_2—CH_2—CH_2—$, wobei diese Verbindungen eine Molekularmasse von 100 bis 10 000 und vorzugsweise von 300 bis 5000 haben.

17. Copolyetheramide gemäß einem der Ansprüche 1 bis 16, dadurch gekennzeichnet, daß die Gewichtsverhältnisse der Amidblöcke in dem endgültigen Polymeren zwischen 15 und 85 % und vorzugsweise zwischen 40 und 60 % liegen und daß die Gewichtsanteile der Etherblöcke zwischen 85 und 15 % und vorzugsweise zwischen 60 und 40 % liegen.

**Patentansprüche** (für den Vertragsstaat AT)

1. Verfahren zur Herstellung von homogenen Copolyetheramiden mit Blockstruktur, die insbesondere einen Schmelz- oder Erweichungspunkt mindestens gleich 170 °C, eine Glasübergangstemperatur, gemessen bei EHO, höchstens gleich — 5 °C und eine Schmelzviskosität mindestens gleich 50 Pas aufweisen, wobei dieses Verfahren entsprechend der durch die folgenden Stufen definierten Arbeitsweise durchgeführt wird :

(a') man vermischt ein Lactam mit 4 bis 12 Kohlenstoffatomen mit einer Lösung eines Salzes eines Fettsäuredimeren und einer geeigneten Aminverbindung in einem Lösungsmilieu auf Basis einer Mischung Wasser-aliphatischer Alkohol mit weniger als 5 Kohlenstoffatomen, eines Gemisches Wasser-Alkohol-Lactam (der verwendete Alkohol und das Lactam entsprechen der einen oder anderen der vorstehend angegebenen Definitionen), des Lactams selbst in geschmolzenem Zustand oder auch, wenn das Lactam in Wasser löslich ist, eines Gemisches Wasser-Lactam ;

(b') die Stöchiometrie dieses Salzes wird vorher festgesetzt, indem das pH der Lösung des Salzes in einem Verdünnungsgemisch auf Basis von Wasser und mindestens einer Verbindung, ausgewählt aus einem aliphatischen Alkohol, einem aliphatischen Diol oder einem Lactam (der verwendete Alkohol und das verwendete Lactam entsprechen der einen oder anderen der vorstehend angegebenen Definitionen, das aliphatische Diol hat 2 bis 6 Kohlenstoffatome), gemessen wird und indem die Zusammensetzung dieses Salzes derart eingestellt wird, daß das pH bei ± 0,05 pH-Einheit den pH-Wert im Äquivalenzpunkt erreicht, wobei das Gemisch der Lösung des Salzes mit dem Lactam weggelassen werden kann, wenn die Lösung des Salzes in dem Auflösungsmilieu auf Basis eines Gemisches Wasser-Alkohol-Lactam, eines Gemisches Wasser-Lactam oder Lactam selbst in geschmolzenem Zustand genügend Lactam enthält, um das Copolyetheramid mit der gewünschten Zusammensetzung zu erhalten ;

(c') dann gibt man in das Reaktionsgemisch einen Katalysator ;

(d') und man unterwirft dann das Ganze einem Erhitzen, um das Lactam mit dem Salz reagieren zu lassen ; wobei dieses Verfahren dadurch gekennzeichnet ist, daß man in der Stufe (a') ein Salz des Fettsäuredimeren und eines Gemisches Polyoxyalkylendiamin mit einem Triamin einsetzt und daß man in der Stufe (c') einen Katalysator verwendet, der entweder aus einer Verbindung (alpha) oder einer Verbindung (beta) besteht, wobei (alpha) eine Mineraloxysäure oder eine organische Oxysäure, anders als eine Carbonsäure, bezeichnet, wovon wenigstens eine der Säurefunktionen, wenn es davon mehrere gibt, eine Ionisationskonstante pka in Wasser bei 25 °C gleich oder unterhalb von 4 besitzt, (beta) ein Alkali- oder Erdalkalisalz dieser Säure bezeichnet.

2. Verfahren zur Herstellung von homogenen Copolyetheramiden mit Blockstruktur, die insbesondere einen Schmelz- oder Erweichungspunkt mindestens gleich 170 °C, eine Glasübergangstemperatur, gemessen bei EHO, höchstens gleich — 5 °C und eine Schmelzviskosität mindestens gleich 50 Pas aufweisen, wobei dieses Verfahren entsprechend der durch die folgenden Stufen definierten Arbeitsweise durchgeführt wird :

(a') man vermischt ein Lactam mit 4 bis 12 Kohlenstoffatomen mit einer Lösung eines Salzes von dimerer Fettsäure und einer geeigneten Aminverbindung in einem Auflösungsmilieu auf Basis eines Gemisches Wasser-aliphatischer Alkohol mit weniger als 5 Kohlenstoffatomen, eines Gemisches Wasser-Alkohol-Lactam (der verwendete Alkohol und das verwendete Lactam entsprechen der einen oder anderen der vorstehend gegebenen Definitionen), von Lactam selbst in geschmolzenem Zustand oder auch, wenn das Lactam in Wasser löslich ist, eines Gemisches Wasser-Lactam ;

(b') die Stöchiometrie dieses Salzes wird vorher festgestellt, indem das pH der Lösung des Salzes in einem Verdünnungsgemisch auf Basis von Wasser und mindestens einer Verbindung, ausgewählt unter einem aliphatischen Alkohol, einem aliphatischen Diol oder einem Lactam (der verwendete Alkohol und das verwendete Lactam entsprechen der einen oder anderen der vorstehend gegebenen Definitionen, das aliphatische Diol umfaßt 2 bis 6 Kohlenstoffatome), gemessen wird und indem die Zusammensetzung dieses Salzes in der Weise eingestellt wird, daß das pH bei ± 0,05 pH-Einheiten den pH-Wert am Äquivalenzpunkt erreicht und das Gemisch der Lösung des Salzes mit dem Lactam weggelassen werden

kann, wenn die Lösung des Salzes in dem Auflösungsmilieu auf Basis eines Gemisches Wasser-Alkohol-Lactam, eines Gemisches Wasser-Lactam oder Lactam selbst in geschmolzenem Zustand genügend Lactam enthält, um das Copolyetheramid der gewünschten Zusammensetzung zu erhalten ;

(c′) dann gibt man in das Reaktionsgemisch einen Katalysator ;

(d′) man unterwirft dann das Ganze einem Erhitzen, um das Lactam mit dem Salz reagieren zu lassen ; wobei das genannte Verfahren dadurch gekennzeichnet ist, daß man in der Stufe (a′) ein Salz von dimerer Fettsäure und Polyoxyalkylendiamin ohne Triamin einsetzt und daß man in der Stufe (c′) einen katalysator verwendet, der aus der Verbindung (beta) besteht, wie sie vorstehend in Anspruch 1 definiert ist.

3. Verfahren zur Herstellung von homogenen Copolyetheramiden mit Blockstruktur, die insbesondere einen Schmelz- oder Erweichungspunkt mindestens gleich 170 °C, eine Glasübergangstemperatur, gemessen bei EHO, höchstens gleich — 5 °C und eine Schmelzviskosität mindestens gleich 50 Pas aufweisen, wobei dieses Verfahren entsprechend der durch die folgenden Stufen definierten Arbeitsweise durchgeführt wird :

(a″) man vermischt ein Lactam mit 4 bis 12 Kohlenstoffatomen mit einer Lösung eines Salzes von dimerer Fettsäure und einer geeigneten Aminverbindung in einem Auflösungsmilieu auf Basis eines Gemisches von Wasser-aliphatischem Alkohol mit weniger als 5 Kohlenstoffatomen, eines Gemisches Wasser-Alkohol-Lactam (der verwendete Alkohol und das verwendete Lactam entsprechen der einen und anderen der vorstehend gegebenen Definitionen), von Lactam selbst in geschmolzenem Zustand oder auch, wenn das Lactam in Wasser löslich ist, eines Gemisches Wasser-Lactam ;

(b″) die Stöchiometrie dieser Lösung wird vorher festgesetzt, indem das pH der Lösung in einem Verdünnungsgemisch auf Basis von Wasser und mindestens einer Verbindung, ausgewählt unter einem aliphatischen Alkohol, einem aliphatischen Diol oder einem Lactam (der Alkohol oder das Lactam entsprechen der einen und anderen der vorstehend gegebenen Definitionen, das aliphatische Diol umfaßt 2 bis 6 Kohlenstoffatome), gemessen wird und indem die Zusammensetzung derart eingestellt wird, daß das pH bei ± 0,05 pH-Einheiten den pH-Wert am Äquivalenzpunkt erreicht, wobei das Gemisch der Lösung des Salzes mit dem Lactam weggelassen werden kann, wenn die Lösung des Salzes in dem Auflösungsmilieu auf Basis eines Gemisches Wasser-Alkohol-Lactam, eines Gemisches Wasser-Lactam oder Lactam selbst in geschmolzenem Zustand hinreichend Lactam enthält, um das Copolyetheramid der gewünschten Zusammensetzung zu erhalten ;

(c″) dann läßt man durch Erhitzen das Lactam mit dem Salz in Gegenwart eines Katalysators reagieren, wobei dieses Verfahren dadurch gekennzeichnet ist, daß der verwendete Katalysator in die Lösung des Salzes von dimerer Fettsäure und Aminverbindung zugegeben wird, bevor die Stöchiometrie der Lösung reguliert wird, und die Aminverbindung aus einem Polyoxyalkylendiamin allein oder im Gemisch mit einem Triamin besteht und der Katalysator entweder aus der Verbindung (alpha) oder aus der Verbindung (beta), wie vorstehend in Anspruch 1 definiert, besteht.

4. Verfahren gemäß einem der Ansprüche 1 und 3, dadurch gekennzeichnet, daß das Triamin, das man in der Stufe (a′) oder (a″) verwendet, eine Verbindung ist, ausgewählt aus der Gruppe, die durch Bis-hexamethylentriamin der Formel $H_2N—(CH_2)_6—NH—(CH_2)_6—NH_2$ und den Polyoxyalkylentriaminen der Formel (I) gebildet ist :

$$R_1 \left[ (OCH_2\underset{X}{\underset{|}{C}}H)_n - OC\underset{Y}{\underset{|}{H}} - \underset{Z}{\underset{|}{C}}H - NH_2 \right]_3 \qquad (I)$$

worin

$R_1$ ein dreiwertiger Rest ist, welcher der Rest eines trihydroxylierten, aliphatischen Alkohols ist, der polyoxyalkyliert werden kann und 3 bis 10 Kohlenstoffatome hat ;

Z ist ein linearer oder verzweigter Alkylrest mit 1 bis 18 Kohlenstoffatomen ;

X und Y, die identisch oder verschieden sind, bedeuten jeweils ein Wasserstoffatom oder einen Rest Z ;

das Symbol n bedeutet eine mittlere Zahl von 0 bis 50.

5. Verfahren gemäß einem der Ansprüche 1 und 3, dadurch gekennzeichnet, daß das Triamin, das in der Stufe (a′) oder (a″) verwendet wird, eine Verbindung der Formel (I) ist, worin $R_1$ die vorstehend in Anspruch 4 gegebene Definition hat ; Z ein Methylrest ist ; X für Z steht ; Y ein Wasserstoffatom ist und n den mittleren Wert von 1 bis 16 hat.

6. Verfahren gemäß Anspruch 5, dadurch gekennzeichnet, daß das Triamin ein Polyoxypropylentriamin der Formel (II) ist :

(Siehe Formel II Seite 32 f.)

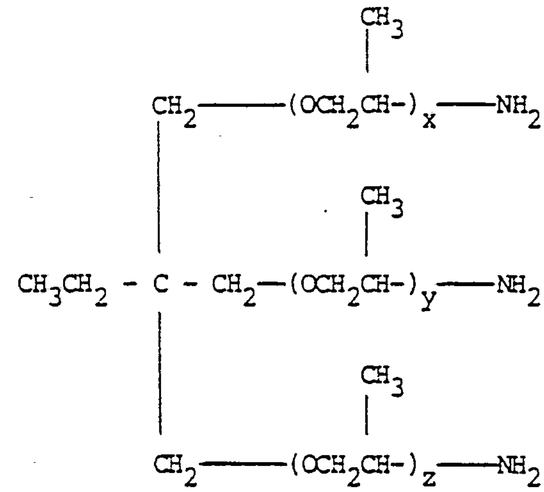

(II)

worin die Symbole x, y und z jeweils eine mittlere Zahl von 1 bis 10 bedeuten mit der Summe x + y + z von 3 bis 30.

7. Verfahren gemäß einem der Ansprüche 1 und 3 bis 6, dadurch gekennzeichnet, daß die eingesetzten Mengen an Triamin, ausgedrückt als Millimol Triamin pro 1 kg End-Copolyetheramid, im allgemeinen zwischen 0,1 und 20, vorzugsweise zwischen 1 und 10, liegen.

8. Verfahren gemäß einem der Ansprüche 1 und 3 bis 7, dadurch gekennzeichnet, daß der Katalysator (alpha), der verwendet wird, aus den folgenden Gruppen besteht :

unter den mineralischen Oxysäuren ; Schwefligesäure, Schwefelsäure, Hypophosphorigesäure, Phosphorigesäure, Orthophosphorsäure oder Pyrophosphorsäure ;

unter den organischen Oxysäuren :

die Organosulfonsäuren der Formel $R_2$—$SO_3H$ (III), worin $R_2$ bedeutet : einen linearen oder verzweigten Alkylrest mit 1 bis 6 Kohlenstoffatomen ; einen Phenylrest, gegebenenfalls substituiert durch 1 bis 3 Alkylreste mit 1 bis 3 Kohlenstoffatomen ; einen Phenylalkylrest mit 1 bis 3 Kohlenstoffatomen im Alkylrest und dessen Benzolring gegebenenfalls substituiert sein kann durch 1 bis 3 Alkylreste mit 1 bis 3 Kohlenstoffatomen ; oder einen Naphthylrest, gegebenenfalls substituiert durch 1 bis 4 Alkylreste mit 1 bis 3 Kohlenstoffatomen ;

die Organophosphonsäuren der Formel $R_3$—$P(O)(OH)_2$ (IV) worin $R_3$ einen Alkylrest, einen Phenylrest oder einen Phenylalkylrest bedeutet, wobei jeder dieser Reste die vorstehend für $R_2$ angegebene Definition hat ;

die Organophosphinsäuren der Formel $R_4R_5$—P(O)(OH) (V) worin $R_4$ und $R_5$ identisch oder verschieden sind und jeweils bedeuten : einen geraden Alkylrest mit 1 bis 3 Kohlenstoffatomen ; einen Phenylrest oder einen Phenylalkylrest, wobei jeder dieser zwei letztgenannten Reste die vorstehend für $R_2$ gegebene Definition hat ;

die Organophosphonigensäuren der Formel $R_6$H—P(O)(OH) (VI), worin $R_6$ bedeutet : einen linearen oder verzweigten Alkylrest mit 1 bis 4 Kohlenstoffatomen (die Verzweigung ist für einen Alkylrest mit 4 Kohlenstoffatomen ausgeschlossen) ; einen Phenylrest oder einen Phenylalkylrest, wobei jeder dieser beiden letztgenannten Reste die vorstehend für $R_2$ gegebene Definition hat.

9. Verfahren gemäß Anspruch 8, dadurch gekennzeichnet, daß die (alpha) Säuren, welche verwendet werden, bestehen aus Säuren, abgeleitet von Phosphor, gehörend zu der Gruppe der Hypophosphorigen-, Phosphorigen-, Orthophosphor-, Pyrophosphor-, Methylphosphon-, Phenylphosphon-, Benzylphosphon-, Dimethylphosphin-, Diphenylphosphin-, Methylphenylphosphin-, Dibenzylphosphin-, Methylphosphonige-, Phenylphosphonige- oder Benzylphosphonigesäuren.

10. Verfahren gemäß einem der Ansprüche 1 bis 7, dadurch gekennzeichnet, daß der Katalysator (beta), der verwendet wird, aus Natrium- und Kaliumsalzen von den vorstehend in Anspruch 8 zitierten Säuren besteht und vorzugsweise aus Natrium- und Kaliumsalzen von Säuren, die von Phosphor abgeleitet sind, wie sie vorstehend in Anspruch 9 genannt sind.

11. Verfahren gemäß einem der Ansprüche 8 bis 10, dadurch gekennzeichnet, daß die Mengenverhältnisse von starker Säuren (alpha) oder Salz (beta), ausgedrückt in Gewichtsprozenten in bezug auf das End-Copolyetheramid, im allgemeinen zwischen 0,01 und 1 % und vorzugsweise zwischen 0,01 und 0,5 % liegen.

12. Verfahren gemäß einem der Ansprüche 1 bis 11, dadurch gekennzeichnet, daß das verwendete Lactam ε-Caprolactam ist.

13. Verfahren gemäß einem der Ansprüche 1 bis 12, dadurch gekennzeichnet, daß die verwendeten dimeren Säuren erhalten sind durch Polymerisation und Fraktionierung von Verbindungen, enthaltend 80 bis 100 Gew.% monomere Fettsäure(n) mit 16 bis 20 Kohlenstoffatomen und 20 bis 0 Gew.% monomere Fettsäure(n) mit 8 bis 15 Kohlenstoffatomen und/oder 21 bis 24 Kohlenstoffatomen, wobei diese dimeren Säuren eine Fraktion an difunktioneller Säure enthalten, die größer als 94 Gew.% ist, eine Fraktion an

monofunktioneller Säure, die unterhalb 1 Gew.% ist, und eine Fraktion an Säure mit Funktionalität über 2, welche unterhalb 5 Gew.% liegt.

14. Verfahren gemäß Anspruch 13, dadurch gekennzeichnet, daß die verwendeten dimeren Säuren aus Arten bestehen, die durch Fraktionierung einer hydrierten Zusammensetzung von der katalytischen Polymerisation von monomerer(n) Fettsäure(n) mit 18 Kohlenstoffatomen erhalten wurden.

15. Verfahren gemäß einem der Ansprüche 1 bis 14, dadurch gekennzeichnet, daß die verwendeten Polyoxyalkylendiamine Verbindungen der allgemeinen Formel

$$H_2N—R_7—(OR_8)_m—OR_9—NH_2 \qquad (VII)$$

sind, worin die Symbole $R_7$, $R_8$ und $R_9$, die identisch oder verschieden sind, zweiwertige, gesättigte, aliphatische Reste, gerade oder verzweigt, mit 1 bis 10 Kohlenstoffatomen sind und das Symbol m ist eine Zahl, die derart bestimmt ist, daß eine Molekularmasse von 100 bis 10 000 und vorzugsweise von 300 bis 5 000 erhalten wird.

16. Verfahren gemäß Anspruch 15, dadurch gekennzeichnet, daß die verwendeten Polyoxyalkylendiamine Polyoxypropylendiamine der Formel (VII) sind, worin

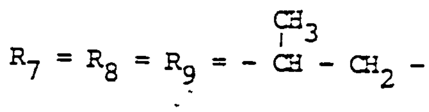

Polyoxyethylendiamine der Formel (VII), worin

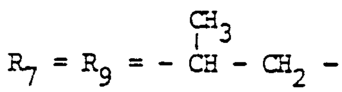

und $R_8 = —CH_2—CH_2—$, oder Polyoxytetramethylendiamine der Formel (VII), worin

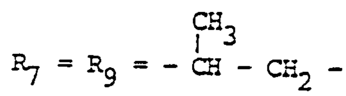

und $R_8 = —CH_2—CH_2—CH_2—CH_2—$, wobei diese Verbindungen eine Molekularmasse von 100 bis 10 000 und vorzugsweise von 300 bis 5 000 haben.

17. Verfahren gemäß einem der Ansprüche 1 bis 16, dadurch gekennzeichnet, daß die Gewichtsverhältnisse der Amidblöcke in dem endgültigen Polymeren zwischen 15 und 85 % und vorzugsweise zwischen 40 und 60 % liegen und daß die Gewichtsanteile der Etherblöcke zwischen 85 und 15 % und vorzugsweise zwischen 60 und 40 % liegen.